# EUROPEAN PATENT APPLICATION

(11) **EP 1 783 679 A1**
(43) Date of publication of application: **09.05.2007**
(21) Application number: 05766363.5
(22) Date of filing: 15.07.2005
(51) Int. Cl.: G06Q 50/00, G06Q 30/00, G06F 21/24, G06F 13/00, G06F 21/00, G10K 15/02, H04N 7/173

(54) **TRANSMISSION HISTORY DEPENDENCY PROCESSOR**

(30) Priority: 26.07.2004 JP 2004216733
(71) Applicant: MATSUSHITA ELECTRIC INDUSTRIAL CO., LTD., Osaka 571-8501 (JP)
(72) Inventor: TOJO, Masaaki, c/o Matsushita El.Ind.Co.,Ltd., Osaka-shi, Osaka 540-619 (JP)
(74) Representative: Betten & Resch
(86) International application number: PCT/JP2005/013188
(87) International publication number: WO 2006/011388

(57) **Abstract**

[PROBLEMS] It has been impossible in the prior art to prevent an unauthorized distribution of contents such as the contents distribution in the mode undesired by the author over the network. A problem is that it is necessary for preventing such unauthorized distribution to decide whether or not a terminal at the distribution stage is authorized for a distribution object. Another problem is that it is necessary to decide whether or not the distributed terminal is authorized for the contents reproduction.

[MEANS FOR SOLVING PROBLEMS] In order to solve the problems, a first transmission history dependency processor is provided for processing an electronic request indicated by request information in accordance with the transmission history of the request information. Alternatively, a second transmission history dependency processor is provided for processing object information such as contents in accordance with the transmission history of the object information. On the basis of transmission paths, therefore, the management can be made to protect the copy right of the contents effectively.

## Description

### BACKGROUND OF THE INVENTION

### Field of the Invention

The present invention relates to a technology for processing an electronic request or object information in accordance with information regarding a transmission path of the electronic request, and a transmission history including the transmission path, or a transmission path of the object information, and a transmission history including the transmission path.

### Description of the Related Art

In order to protect the copyright of the content in the content distribution system for music or movies etc. via the internet, it is necessary to prevent a user from browsing the content distributed in an unauthorized manner. As a distribution system for data including content, of which copyright is to be protected, the following technology is disclosed in Japanese Patent Publication No. 2002-341881. In the system of Japanese Patent Publication No. 2002-341881, for example, the host server transmits the digital data with the distribution history information of the data. This distribution history information is updated with respect to each re-distribution of the copy of the data between terminals. Then, the host server carries out management of the data such as an accounting process.
Patent document 1: Japanese Patent Publication No. 2002-341881

However, the protection of the copyright by means of the aforementioned system is just an ex-post protection such as an accounting process based on the distribution history information, and is not enough for preventing the unauthorized content distribution such as content distribution in a form undesired by the copyright holder. In order to prevent such unauthorized distribution, it is necessary to determine the authenticity of a terminal as a destination of distribution in the distribution process. Additionally, it is necessary to determine the authenticity of content reproduction by the terminal, to which the content has been distributed.

### SUMMARY OF THE INVENTION

In order to solve the above deficiencies, the present invention provides a system for tracing and managing a transmission path of request information such as a distribution request for content. Consequently, it becomes possible to determine the authenticity of the terminal as a destination of distribution in the distribution process. For example, a content distribution request, which has been received without passing an accounting server specified by the copyright holder, is rejected.

In addition, it secondarily becomes possible to improve various electronic processing in accordance with transmission history etc. The transmission history is a history of transmission, and includes time required for transmission etc. other than the transmission path. For example, a request for an electronic processing, of which the time required for transmission is longer than that of a line with heavy traffic, may be rejected because there is a possibility that it has been falsified in the transmission by someone.

Specifically, the present invention will provide a first transmission history-dependent processing apparatus comprising a first receiver, which receives request information, and first transmission history information indicating a transmission history of the request information, a first acquirer for transmission history information, which acquires said first transmission history information, a first storage for procedure information, which stores first procedure information defining processing of the request information based on the transmission history, and a first processor, which processes the request information in accordance with the first procedure information.

In addition, the present invention provides a system for tracing and managing a transmission path of request information such as a distribution request for content. Consequently, it becomes possible to determine the authenticity of a terminal, which has received the distributed content, to reproduce the content. For example, content, which has been downloaded without passing an administration server associated with the content server owned by the copyright holder, (e.g., content downloaded from an unauthorized personal website etc.) is made to be unreproducible.

Specifically, the present invention will provide a second transmission history-dependent processing apparatus comprising a second receiver, which receives object information, and second transmission history information of the object information, a second acquirer for transmission history information, which acquires the second transmission history information, a second storage for procedure information, which stores second procedure information defining processing of the object information based on the transmission history, and a second processor, which processes the object information in accordance with the second procedure information stored by the second storage for procedure information.

In addition, the preset invention will provide the third transmission history-dependent processing apparatus, which is provided with both functions of the first and second transmission history-dependent processing apparatuses.

According to the present invention having the aforementioned configuration, it becomes possible to manage the copyright of content on the network based on the transmission history of the request information for content distribution or on the transmission history of the content itself in the distribution process without using an authentication server etc. in a conventional manner, or without depending on the result of authentication alone, thereby providing effectiveness to the protection of the copyright of content.

In addition, according to the system of the present invention, which manages the transmission path, it becomes possible to build a copyright business such as collection of licensing fees according to the transmission path.

In considering the above deficiencies, it is an objective of the present invention to manage and protect the copyright of the content by managing the transmission path of the distribution request for content distributed on the network or the transmission path of the content distribution. Further, it is possible to achieve other meaningful objectives. Therefore, by means of the present invention, it becomes possible to carry out management, protection, or authentication etc. for requests other than the content distribution. For example, in cases where a request for unlocking an electronic lock is transmitted from outside via the internet, in order to identify whether the request is sent by a malicious third party, it is determined whether the request information has passed a predetermined transmission path on the network such as an authentication server managed by a security firm. If the request has passed an unauthorized transmission path, the request is rejected as an unauthenticated request.

As described above, according to the present invention, it becomes possible to appropriately process the electronic requests according to the transmission paths of various electronic requests other than the request for content distribution.

### BRIEF DESCRIPTION OF THE DRAWINGS

Fig. 1 is a diagram exemplifying the contents distribution service by means of the first transmission history-dependent processing apparatus of the first embodiment;
Fig. 2 is a functional block diagram of the first transmission history-dependent processing apparatus of the first embodiment;
Fig. 3 is a pattern diagram of the first procedure information stored by the first storage for procedure information of the first embodiment;
Fig. 4 is a diagram explaining the processing of the request information by the processor of the first embodiment by comparing the first procedure information, the request information, and the transmission history information thereof;
Fig. 5 is a flow chart exemplifying the processing flow of the first embodiment;
Fig. 6 is a functional block diagram of the first transmission history-dependent processing apparatus of the second embodiment;
Fig. 7 is a functional block diagram of the first transmission history-dependent processing apparatus of the third embodiment;
Fig. 8 is a pattern diagram of the first procedure information stored by the first storage for procedure information of the fourth embodiment;
Fig. 9 is a flow chart exemplifying the processing flow of the fourth embodiment;
Fig. 10 is a pattern diagram of the first procedure information stored by the first storage for procedure information of the fifth embodiment;
Fig. 11 is a flow chart exemplifying the processing flow of the fifth embodiment;
Fig. 12 is a diagram exemplifying the contents distribution service by means of the second transmission history-dependent processing apparatus of the eighth embodiment;
Fig. 13 is a functional block diagram of the second transmission history-dependent processing apparatus of the eighth embodiment;
Fig. 14 is a flow chart exemplifying the processing flow of the eighth embodiment;
Fig. 15 is a functional block diagram of the second transmission history-dependent processing apparatus of the ninth embodiment;
Fig. 16 is a functional block diagram of the second transmission history-dependent processing apparatus of the tenth embodiment;
Fig. 17 is a flow chart exemplifying the processing flow of the eleventh embodiment;
Fig. 18 is a flow chart exemplifying the processing flow of the twelfth embodiment;
Fig. 19 is a functional block diagram of the third transmission history-dependent processing apparatus of the thirteenth embodiment;
Fig. 20 is a flow chart exemplifying the processing flow of the fourteenth embodiment;
Fig. 21 is a functional block diagram of the third transmission history-dependent processing apparatus of the fourteenth embodiment;
Fig. 22 is a functional block diagram of the third transmission history-dependent processing apparatus of the fifteenth embodiment;
Fig. 23 is a flow chart exemplifying the processing flow of the sixteenth embodiment;
Fig. 24 is a flow chart exemplifying the processing flow of the seventeenth embodiment;
Fig. 25 is a diagram exemplifying the request information of the first embodiment;
Fig. 26 is a diagram exemplifying the first transmission history information of the second embodiment.

### DETAILED DESCRIPTION OF THE PREFERRED EMBODIMENTS

Embodiments of the present invention will be described hereinbelow with reference to the drawings. The present invention is not to be limited to the above embodiments and able to be embodied in various forms without departing from the scope thereof.

Note that in the first to seventh embodiments, the first transmission history-dependent processing apparatus, which carries out processing of the request information in accordance with the transmission history of the request information in contents distribution etc., will be described. The first embodiment will mainly describe Claim 1 and 22. The second embodiment will mainly describe Claim 2. The third embodiment will mainly describe Claim 3. The fourth embodiment will mainly describe Claim 4 and 23. The fifth and twenty-fourth embodiments will mainly describe Claim 5. The sixth embodiment will mainly describe Claim 6. The seventh embodiment will mainly describe Claim 7.

In addition, in the eighth to twelfth embodiments, the second transmission history-dependent processing apparatus, which carries out processing of the object information in accordance with the transmission history of the object information such as content itself, will be described. The eighth embodiment will mainly describe Claims 8 and 25. The ninth embodiment will mainly describe Claim 9. The tenth embodiment will mainly describe Claim 10. The eleventh embodiment will mainly describe Claims 11 and 26. The twelfth and twenty-seventh embodiments will mainly describe Claim 12.

In addition, in the thirteenth to nineteenth embodiments, the third transmission history-dependent processing apparatus, which is provided with both functions of the first and second transmission history-dependent processing apparatuses, will be described. The thirteenth and twenty-eighth embodiments will mainly describe Claim 13. The fourteenth embodiment will mainly describe Claim 14. The fifteenth embodiment will mainly describe Claim 15. The sixteenth embodiment will mainly describe Claims 16 and 29. The seventeenth and thirtieth embodiments will mainly describe Claim 17. The eighteenth embodiment will mainly describe Claim 18. The nineteenth embodiment will mainly describe Claim 19. The twentieth embodiment will mainly describe Claim 20. The twenty-first embodiment will mainly describe Claim 21.

### (First embodiment)

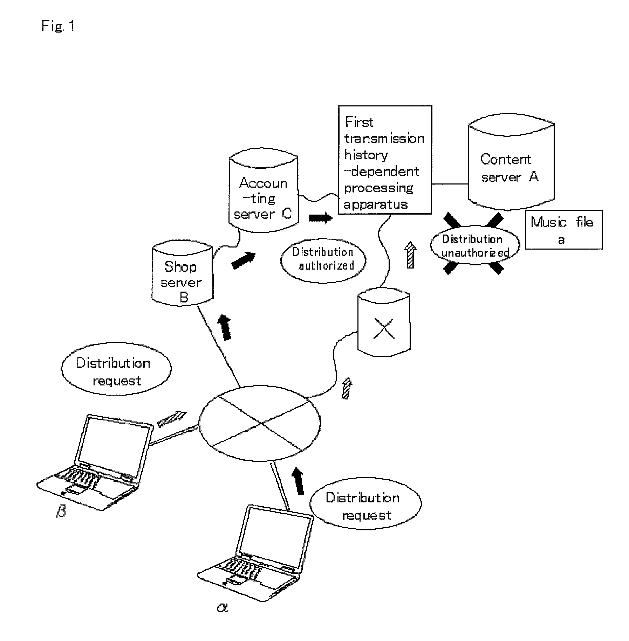

Fig. 1 is a diagram exemplifying the contents distribution service by means of the first transmission history-dependent processing apparatus of the first embodiment. Hereinbelow, the description will be made with reference to the diagram. As shown in this diagram, the terminal α gains access to the content server A managing a music distribution site. Here, the user of the terminal α, who desires to download the music file a in the content server A, sends the request information for the download to the content server A through the specified process of the desired music file a in the shop server B, and through the accounting process in the accounting server C as indicated by the black arrow in the diagram. Then, the first transmission history-dependent processing apparatus of the first embodiment installed in the content server A confirms the transmission path of the request information transmitted from the terminal α. After it is confirmed that the request information has passed the accounting server C, the distribution process of the desired music file a from the content server A is carried out. Thus, the music file a is downloaded to the terminal α.

Meanwhile, the user of the terminal β also desires to download the music file a. However, the user of the terminal β, who does not want to pay a fee for the copyright of the music, gains unauthorized access to the content server A via another server X bypassing the accounting server C as indicated by the shaded arrow in the diagram, and requests for unauthorized download of the music file a. Here, the first transmission history-dependent processing apparatus confirms the request information from the terminal β, and determines that the request information has not passed the accounting server C. Then, the content server A rejects the request for the download, and the distribution process of the music file a is not carried out, so that the user of the terminal β cannot download the music file a in an unauthorized manner.

As described above, according to the first transmission history-dependent processing apparatus of the first embodiment, by confirming whether the request information has passed the accounting server etc. managed by the copyright holder or the copyright management organization in an authorized manner, it becomes possible to determine the authenticity of the terminal as a destination of distribution in the distribution process.

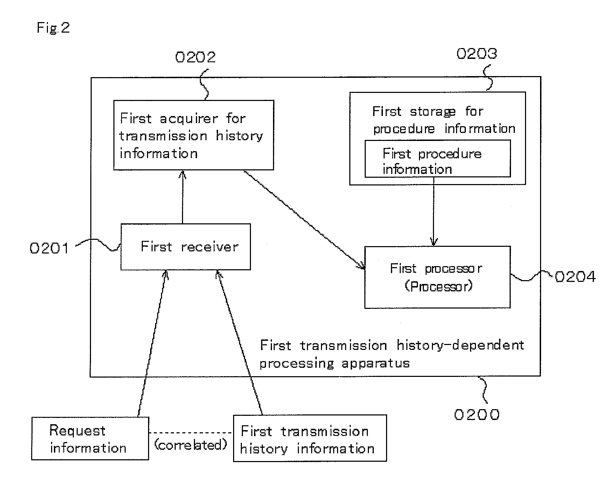

Fig. 2 is a functional block diagram of the first transmission history-dependent processing apparatus of the first embodiment.

Note that, the functional block of the respective apparatuses described hereinbelow can be implemented by hardware, software, or both hardware and software. Specifically, in the case of using a computer, examples of the hardware component include a CPU, a memory, a bus, a hard-disk drive, a reading drive such as CD-ROM or DVD-ROM, a transmission/reception port for various communications, an interface, and other peripheral devices, and examples of the program include a driver program for controlling the hardware, and other application programs.

Specifically, by sequentially carrying out programs on the memory, the data on the memory and the data inputted via the interface are processed, stored, and outputted etc., thereby implementing functions of respective units.

Further, the present invention can be implemented not only as an apparatus or system, but also as a method thereof. Further, a portion of such inventions may be configured as software. Furthermore, a software product used for causing a computer to execute the software, and the recording medium, in which the software is installed, should be included in the technical scope of the present invention (the same is applied through the entire specification).

As shown in this diagram, the 'first transmission history-dependent processing apparatus' (0200) of the first embodiment, comprises, the 'first receiver' (0201), the 'first acquirer for transmission history information' (0202), the 'first storage for procedure information' (0203), and the 'first processor' (0204).

The 'first receiver' (0201) receives request information indicating an electronic request, and first transmission history information indicating a transmission history correlated with said request information.

The 'request information' corresponds to information indicating an electronic request. Examples of the request information include information requesting for content distribution, and in the case of streaming-type data, information requesting for content reproduction. In this case, the request information includes, for example, IP address of the terminal as a destination of the content distribution, and information specifying the content, which is requested to be distributed. Alternatively, information requesting change of content etc. may be included. Further, the request information may include a token attached to header upon authentication in web service.

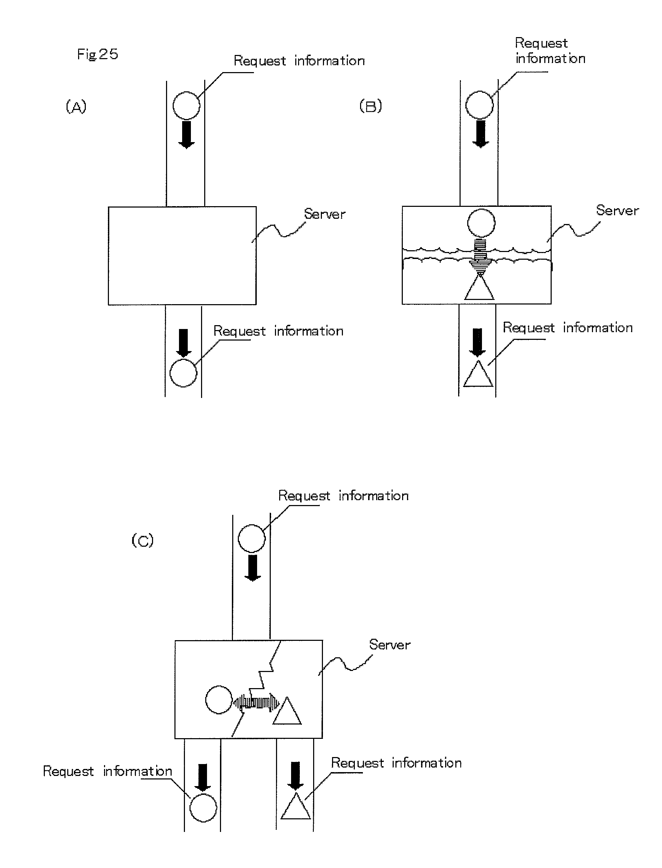

In addition, the request information may be information, of which content is different from that of the original request information, such as the information, of which content is rewritten in a server process (Y from X), or the information, which is derived from the request information as other information (Z from X and X), as shown in Fig. 25 (B) or (C) other than the information, which is not changed during passing though a server and is transmitted to a subsequent server, as shown in Fig. 25 (A). In this case, if the above original request information are identical, the request information, which has been rewritten or derived, may be processed as the identical information. This enables securing of identity of the after-mentioned first transmission history information.

However, the request information is not limited to the above examples, and may include any information, which requests for electronic processing, such as an electronic control signal for a general electronic appliance. Examples of the request information include information regarding request for switching of an air conditioner from an outside location, information regarding request for stock trading by means of operating an electronic terminal connected to a securities company from an outside location, information regarding request for playback of a recording device of an answering machine for confirming recorded sound from an outside location, information regarding request for setting a VCR timer for recording, information regarding request for operating a video camera set up in a home and for transmitting images to a mobile phone from an outside location, information regarding request for printing out electronic documents stored in a home PC specified by a mobile phone to a printer at hand from an outside location, information regarding request for locking or unlocking an electronic lock, and information regarding request for operating a home security system.

As described above, according to the present invention, it becomes possible to reject unauthorized requests such as a request for unlocking an electronic lock by the malicious third party.

The 'first transmission history information' corresponds to information indicating the transmission history of the request information. In addition, the term 'transmission history of request information' corresponds to various histories upon transmission of the request information, and includes, for example, a history of required time, and information indicating a transmission history of previous transaction other than a history of communication path upon transmission. Note that, in the case of the history of communication path, it is difficult to specify one communication path from the communication paths on the internet connected like a web. As a method for specifying the 'communication path', a method, in which by specifying predetermined relay points such as servers, the communication path is indicated, is cited. Therefore, any communication path between the relay points B and C is processed as one communication path.

According to the above method, an example of the first transmission history information includes the information indicating the relay servers B and C as a transmission path. Of course, if it is possible to specify the transmission path itself such as the case of an in-house LAN, the information indicating a transmission cable may be the transmission history information.

Note that, in cases where the first transmission history information is information regarding servers on a transmission path, which have been passed, as described above, and an authentication server is included therein, the first embodiment appears to be the same as the conventional authentication system in terms of superficial content of information and process. However, in the first embodiment, it is important that the authentication server is included in the transmission path unlike in the case of the conventional authentication system, and the first embodiment is characterized in that the determination etc. is carried out regardless of the result of the authentication process by the authentication server.

In addition, the first transmission history information may include information regarding time. In this case, the information may be information regarding absolute time or information regarding relative time. For example, the former is information indicating that the request information has passed the relay device B at (month, day, time, minute, second), and the latter is information indicating that the request information has passed the relay device B at (seconds) after being transmitted from the server A of the content provider Alternatively, information indicating time required to reach the destination of transmission may be allowed.

In addition, in cases where the first transmission fails but a subsequent attempt succeeds, the history of transmission error may be allowed. Alternatively, in the case of request information of the same transaction, the history of previous request information in that transaction may be used.

According to the first transmission history information as described above, it becomes possible to determine that the request information is an authentic request, which has passed the relay servers managed by the copyright holder or by the copyright management organization. In addition, the information regarding time is included as the first transmission history information, thereby enabling specification of the order of relay points passed by the request information. In addition, the information regarding required time is included, thereby enabling distinction as to the credibility of the request information. For example, if transmission takes excessively long, it is determined that the request information has been falsified by a third party.

Note that, the first transmission history information may be generated by adding the identification information of the server to the request information by the server as the relay point, which has been passed. In addition, the information regarding relative time included in the first transmission history information may be generated by means of the information of TTL (Time To Live) in the header.

In addition, not only the server but also the router of the internet may be utilized as the relay point indicating the transmission path. In this case, the identification information of the router, which has been passed by the request information, may be utilized as the transmission history of the request information.

Note that, if the correlation between the above request information and the first transmission history information is confirmable, it is not necessary for them to be received at the same time by the first receiver.

The 'first acquirer for transmission history information' (0202) acquires said first transmission history information.

The first acquirer for transmission history information may acquire the first transmission history information as it is in the transmitted form, or may carry out processing of some kind and acquire it as described below.

For example, if the request information in a certain transaction is acquired, the request information in the previous transaction, which is same transaction as the above transaction, stored in the storage such as a memory or a hard-disk may be additionally acquired as the transmission history information.

Alternatively, the first acquirer for transmission history information acquires the first transmission history information correlated with the request information and received by the first receiver in order to compare the above information with the after-mentioned first procedure information in the after-mentioned first processor. For this purpose, a means for converting the information to the data format suitable for processing by the first processor may be provided. For example, in cases where the first transmission history information is the IP address of the server, which has been passed, and the first procedure information includes URL information of the server to be passed, this IP address is converted to the URL information, and acquired.

The 'first storage for procedure information' (0203) stores first procedure information defining processing of the request information based on the transmission history. The 'first procedure information' corresponds to information defining processing of the request information in accordance with the transmission history. Examples of the first procedure information include information regarding conditions to be fulfilled by the first transmission history information, and information indicating detail of processing executed in accordance with the detail of request.

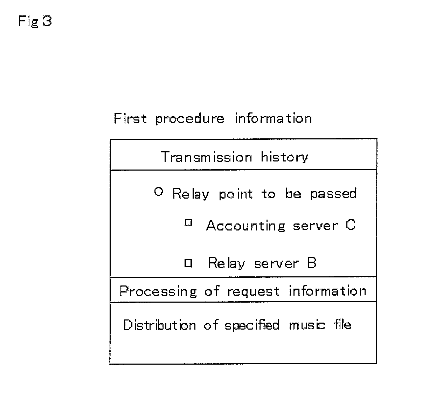

Fig. 3 is a pattern diagram of the first procedure information stored by the first storage for procedure information of the first embodiment. As show in this diagram, the 'accounting server C', and the 'relay server B' are included in the transmission history, the processing of the request information is defined so as to carry out 'distribution of the music file specified by the request information'. Further, the request information including the transmission history indicating passage of 'authentication server for security P' may be information defined so as to carry out 'request for processing indicated by the request information such as unlocking door or drawing personal data'

Of course, the first procedure information may define not only the execution or non-execution of the processing as described above, but also the other executable processes in various forms. Specifically, in cases where the request information indicates the distribution of movie, the time required for transmission is included in the transmission history of the request information. If this required time is longer than a predetermined time, it is determined that the traffic is heavy, so that the process for cutting sound data, and for distributing the abbreviated data including only text data of subtitles and image data is carried out. This makes it possible to avoid the lag between image and sound due to the heavy line traffic in the case of streaming distribution of a movie.

In addition, the definition as to processing of the request information may include not only processing directly relating to a request such as a distribution process for a distribution request, but also a transmission path to be passed upon distribution for a distribution request.

In addition, the first procedure information may define processing in accordance with the transmission history, in which the order of passing the relay points etc. is specified. For example, in the case of a distribution server of a membership system, if request information has passed the accounting server C after the authentication server I, processing is carried out. However, if the transmission history indicates an inverse transmission path, in which the authentication server has been passed after the accounting server, it is determined that the credibility of the request information is doubtful, so that the processing thereof is not carried out.

As described above, the processing of the request information in accordance with the transmission history is defined, so that it becomes possible to carry out appropriate processing of the request information in accordance with the transmission history by the after-mentioned first processor.

The 'first processor' (0204) processes the request information in accordance with the first procedure information stored by the first storage for procedure information. As a concrete example, a method, in which the items in the first procedure information, which are relevant to the request information and the first transmission history information, are compared with the request information and the first transmission history information, and if they match, the procedure indicated by the procedure information such as content distribution processing or content reproduction processing is carried out, is cited.

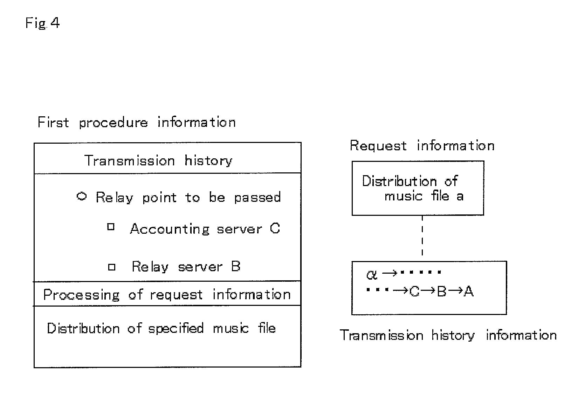

Fig. 4 is a diagram explaining the processing of the request information by the processor of the first embodiment by comparing the first procedure information, the request information, and the transmission history information thereof. As shown in this diagram, the stored first procedure information defines the relay points, the 'accounting server C' and the 'relay server B', and the processing of the request information, 'distribution of the specified music file', in the case of fulfilling said transmission history.

Meanwhile, as the received request information, the transmission history, 'from the terminal α, ..., the accounting server C, the relay server B, ..., to the content server A' is indicated. Here, the first processor compares the request information with the transmission history, and determines whether the request information has passed the relay points, which has been defined as points to be passed. If it is determined that the request information has passed, based on the information specifying the 'music file a' included in the request information, the music file a is transmitted to the IP address of the terminal α included in the request information as a destination of the distribution. If the information indicating the relay points are not the same, the above transmission process is not carried out.

As described above, the first transmission history-dependent processing apparatus of the first embodiment carried out processing of request in accordance with the transmission history of the request information, or appropriate processing, so that by confirming whether the request information has passed the server etc., which is equipped with the content server, and is managed by the copyright holder or the copyright management organization, in an authorized manner, it becomes possible to determine the authenticity of the terminal as a destination of distribution in the distribution process.

In addition, the copyright holder or the copyright management organization manages and monitors the servers as relay points, so that it becomes possible to know the flow of distributed content, and to build a copyright business such as collection of licensing fees according to amount of distribution (number of times), or to transmission path.

In addition, by being equipped with the home server managing home appliances, it becomes possible to determine whether the request for unlocking a door, or for disclosing personal information from an outside location via the network is the request information from a family member, which has passed the authentication server managed by the security company.

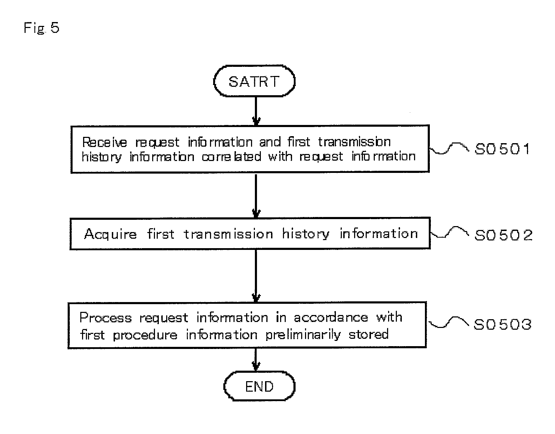

Fig. 5 is a flow chart exemplifying the processing flow of the first embodiment. The processing flow of the first embodiment is as follows. At the outset, the request information and the first transmission history information correlated with said request information are received (step S0501). Subsequently, said first transmission history information received by the step S0501 is acquired (step S0502). Finally, the request information is processed in accordance with the first procedure information preliminarily stored by the first storage for procedure information (step S0503).

As described above, according to the first transmission history-dependent processing apparatus of the first embodiment, it becomes possible to manage the transmission path of the request information such as request for distribution of the content in the network. Consequently, for example, it becomes possible to distribute content only to the request information determined that it has passed the accounting server managed by the copyright holder, thereby providing effectiveness to the protection of the copyright of content.

In addition, by means of the above system, it becomes possible to build a copyright business such as collection of licensing fees according to amount of distribution (number of times), or to transmission path.

In addition, for example, it becomes possible to determine the authenticity of the request information such as an electronic request for locking or unlocking an electronic lock by means of remote operation via the network, or request for playback of a recording device of an answering machine, thereby preventing unauthorized usage.

### (Second embodiment)

The second embodiment according to the first embodiment is characterized in that the first transmission history information includes information regarding passing point, which is information indicating a point which the request information has passed up to its reception by the first receiver. As described above, the internet is a like-web network, so that the transmission path from a user terminal to a content server via an account server and a relay server is not limited to one. This is not the case of utilizing the apparatus of the present invention in a small in-house LAN etc. However, in cases where it is intended to manage and protect the copyright of content distributed in the network, or to manage a home server from an outside location, utilization in a huge network such as the internet is to be assumed. Here, according to the second embodiment, the relay points are indicated as the transmission history information, and any transmission path, in which the accounting server and the relay server are passed, is regarded as one transmission path, so that it becomes possible to produce a great effect in management and protection of the copyright or in prevention of unauthorized usage of a home server.

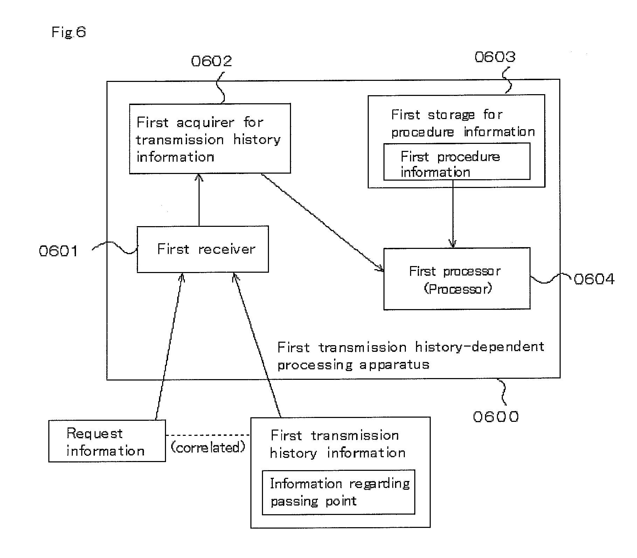

Fig. 6 is a functional block of the first transmission history-dependent processing apparatus of the second embodiment. As shown in this diagram, the 'first transmission history-dependent processing apparatus' (0600) of the second embodiment, comprises, the 'first receiver' (0601), the 'first acquirer for transmission history information' (0602), the 'first storage for procedure information' (0603), and the 'first processor' (0604). Note that the 'first receiver', the 'first acquirer for transmission history information', the 'first storage for procedure information', and the 'first processor' are the same as those of the first embodiment, so that the description thereof will be omitted.

The second embodiment is characterized in that the first transmission history information received by the 'first receiver' includes information regarding passing point.

The 'information regarding passing point' is information indicating a point which the request information has passed up to its reception by the first receiver. An example of the information regarding passing point includes identification information such as IP address of an accounting server specified by the copyright holder, an authentication server specified by a security company, a server for monitoring, a server managed by the rights holder of content re-distribution, a server managed by a sponsor, or a server of a broadcasting station, which broadcasts through streaming. Alternatively, the information regarding passing point may be the identification information of a predetermined router.

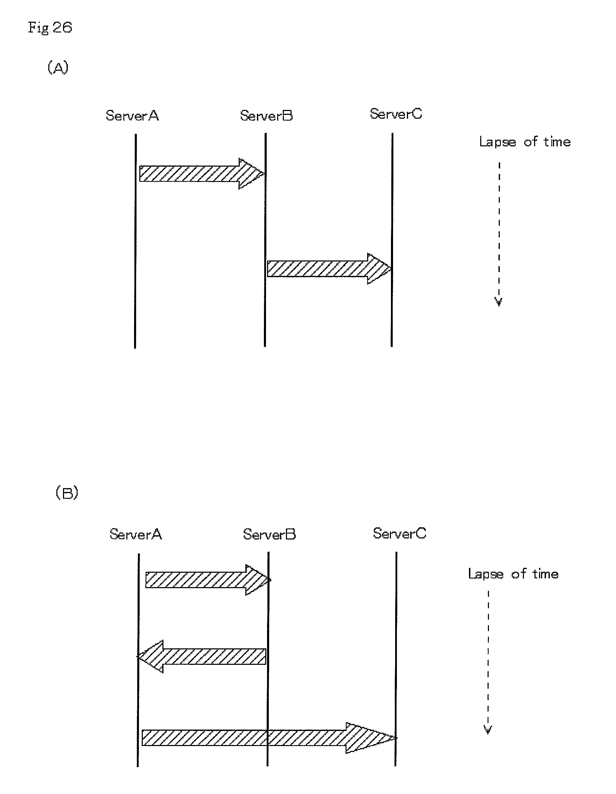

In addition, among the information regarding passing point, which indicates a communication path between the severs, the information indicating relay points as 'the server A, the server B, and the server C' includes the transmission path as shown in Fig. 26 (A), in which the information is transmitted from the server A to the server B, and subsequently, from the server B to the server C. In addition, the first transmission history information indicates the transmission path as 'the server A, the server B, and the server C' includes the transmission path as shown in Fig. 26 (B), in which the information transmitted from the server A to the server B is returned to the server A, and subsequently, the information is transmitted from the server A to the server C.

According to the first transmission history-dependent processing apparatus of the second embodiment, it becomes possible to easily specify a transmission path even in a huge web-like network, thereby producing a great effect in management and protection of the copyright or in prevention of unauthorized usage of a home server.

### (Third embodiment)

The third embodiment according to the first or second embodiment is characterized in that the transmission history information includes information regarding type of transmission medium, which is information indicating type of device, type of recording medium, or type of network medium (e.g. ISDN line or CATV line).

As the third embodiment by means of the first transmission history-dependent processing apparatus, network-enabled microphone-like karaoke equipment, which is for enjoying karaoke by downloading music, is cited. In this case, for example, a user connects the special display for karaoke and the microphone-like karaoke equipment, and further connects them to the internet. After that, music is downloaded from a special site for the karaoke system including the apparatus of the third embodiment. The download is limited to the case where the request information of the music is transmitted via the two transmission mediums, the special display for karaoke and the special microphone-like karaoke equipment. Therefore, the download is limited to the case where the above special transmission mediums are included in the transmission history. This makes it possible to prevent unauthorized distribution of content. In addition, for the content provider, customer retention becomes possible by authorizing downloads from only the special transmission medium, thereby promoting sales of network-enabled products as the transmission medium.

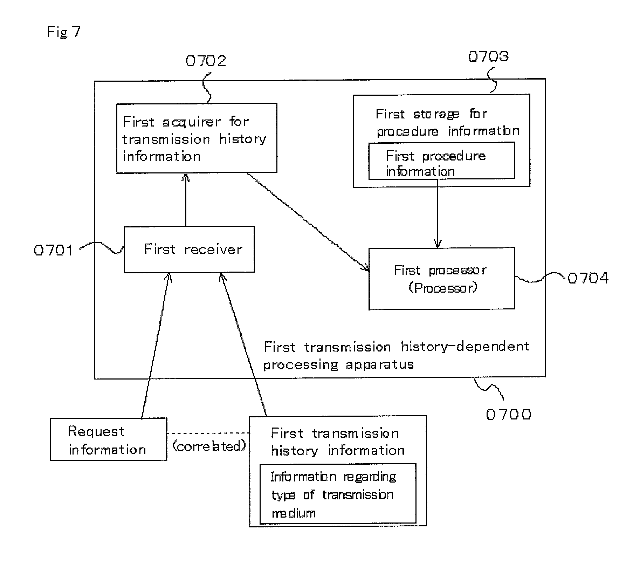

Fig. 7 is a functional block diagram of the first transmission history-dependent processing apparatus of the third embodiment. As shown in this diagram, the 'first transmission history-dependent processing apparatus' of the third embodiment (0700), comprises, the 'first receiver' (0701), the 'first acquirer for transmission history information' (0702), the 'first storage for procedure information' (0703), and the 'first processor' (0704). Note that the 'first receiver', the 'first acquirer for transmission history information', the 'first storage for procedure information', and the 'first processor' are the same as those of the first embodiment, so that the description thereof will be omitted

The third embodiment is characterized in that the first transmission history information received by the 'first receiver' includes information regarding type of transmission medium.

The 'information regarding type of transmission medium' corresponds to information indicating the type of transmission medium which has been used up to the reception of the request information by the first receiver. The transmission medium includes an apparatus, a recording medium, and a network medium etc. Specifically, examples of the information include: type of equipment such as equipment described above, special equipment for service, a relay device for telephone line, an internet server, a computer, or a modem, type of recording medium such as a bridge medium, a non-volatile memory, a CD-ROM, or a DVD-ROM, and type of network medium such as telephone line, internet line, wireless communication line, or CATV line. In addition, type of manufacturer or manager of the products, of the recording mediums, or of the lines, may be included.

As described above, the information regarding type of transmission medium is included in the transmission history, so that the first transmission history information of the third embodiment is able to carry out processing depending on the type of manufacturer or manager, thereby enabling the protection of the copyright of content and customer retention.

In addition, by carrying out processing for the request information in accordance with the type of network medium, it becomes possible to carry out processing on the basis of the first procedure information, for example, if the information indicating a mobile phone line is included in the transmission history information, distribution of high-resolution movie is not carried out.

According to the first transmission history-dependent processing apparatus of the third embodiment, the protection of the copyright of content becomes possible, and for the content provider, the customer retention becomes possible. In addition, carrying out processing in accordance with the type of network medium becomes possible.

### (Fourth embodiment)

The fourth embodiment according to the second embodiment is characterized in that only in the case where the request information has passed all the passing points indicated by the information regarding passing point, the electronic request indicated by the request information is executed. For example, if distribution of content indicated by the request information is executed only in the case where the request information has passed the authentication server and the accounting server, more assured protection of the copyright of content becomes possible by means of the apparatus of the fourth embodiment.

Further, if passage of a portal server managed by a certain manager is further conditioned for the distribution of content in addition to the authentication server and the accounting server, the retention of customers of the content distribution by this manager becomes possible.

Note that the functional block of the first transmission history-dependent processing apparatus of the fourth embodiment is the same as that of the second embodiment, so that the description and illustration thereof will be omitted.

The fourth embodiment is characterized in that the first procedure information defines whether the electronic request indicated by the request information is executed in accordance with the first transmission history information, and the information included in the first transmission history information, which indicates that the request information has passed all said passing points, is used for defining the execution of the electronic request.

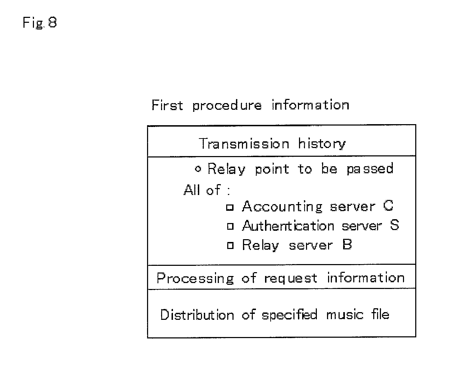

Fig. 8 is a pattern diagram of the first procedure information stored by the first storage for procedure information of the fourth embodiment. As shown in this diagram, in order to carry out the 'distribution of music file' (electronic request), which is indicated by the first procedure information, it is defined that the request information has passed all of the 'authentication server S', the 'accounting server C', and the relay server B. Accordingly, even if the information indicating the 'accounting server C' and the relay server B' is included in the first transmission history information of the request information, in cases where the information indicating the 'authentication server S' is not included, the first transmission history-dependent processing apparatus of the fourth embodiment does not carry out the distribution of music file.

Note that the term 'has passed all said passing points' may be more strictly defined. For example, if the servers A, B, and C are defined as passing points, nothing is included other than the servers A, B, and C in the transmission path from the transmitter to the transmission destination of the request information. Of course, it may be defined that something is included other than the servers A, B, and C in the transmission path from the transmitter to the transmission destination of the request information.

As described above, by rigorously defining the first procedure information, more assured protection of the copyright of content becomes possible. In addition, as described above, if the portal server managed by a certain manager is defined as the passing point by the first procedure information, the retention of customers of the content distribution by this manager becomes possible.

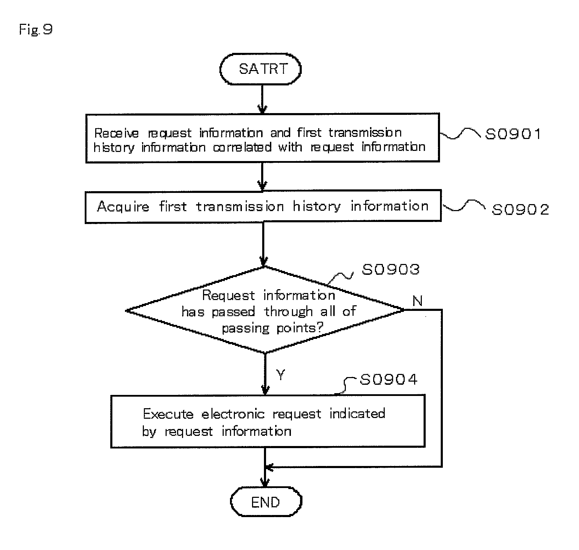

Fig. 9 is a flow chart exemplifying the processing flow of the fourth embodiment. The processing flow of the fourth embodiment is as follows. At the outset, the request information and first transmission history information correlated with the request information are received (step S0901). Subsequently, the first transmission history information received by said step S0901 is acquired (step S0902).

Subsequently, it is determined whether the request information has passed all the passing points (step S0903). If it is determined that the request information has passed all the passing points, the electronic request indicated by the request information is executed (step S0904).

Meanwhile, if it is determined that the request information has not passed all the passing points, the electronic request indicated is not executed, and the processing is terminated.

According to the first transmission history-dependent processing apparatus of the fourth embodiment, more assured protection of the copyright of content becomes possible. In addition, if the portal server managed by a certain manager is defined as the passing point by the first procedure information, the retention of customers of the content distribution by this manager becomes possible.

### (Fifth embodiment)

The fifth embodiment according to the second embodiment is characterized in that in cases where the request information has passed at least one of the passing points indicated by the information regarding passing point, the electronic request indicated by the request information is executed. Therefore, unlike the fourth embodiment, the copyright of content is less rigorously protected. However, as long as it is indicated that the request information has passed the account server etc., the property right of the copyright holder can be protected, and the person who requests for the distribution can receive the content. Therefore, it is not necessary that all of the passing points are passed. Meanwhile, in the case of the first procedure information of the fourth embodiment, for example, if a large amount of request information of popular content has passed all the servers as the passing points, the load of each server becomes heavy. In order to avoid this, by means of the configuration, in which a plurality of accounting servers are provided, and any one of the servers is specified to be passed, it becomes possible to reduce the load of the accounting server.

Of course, if the authentication server or the relay server other than the accounting server is defined as the passing point, there is no difference in terms of function and effect of the apparatus of the fifth embodiment.

Note that the functional block of the first transmission history-dependent processing apparatus of the fifth embodiment is the same as that of the second embodiment, so that the description and illustration thereof will be omitted.

The fourth embodiment is characterized in that the first procedure information defines whether the electronic request indicated by the request information is executed in accordance with the first transmission history information, and the information included in the first transmission history information, which indicates that the request information has passed at least one of said passing points, is used for defining the execution of the electronic request.

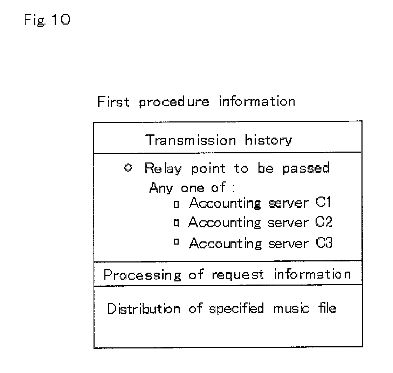

Fig. 10 is a pattern diagram of the first procedure information stored by the first storage for procedure information of the fifth embodiment. As shown in this diagram, in order to carry out the 'distribution of music file' (electronic request), which is indicated by the first procedure information, it is defined that the request information has passed at least one of the 'accounting server C1', the 'accounting server C2', or the 'accounting server C3'. Accordingly, if the information indicating any one of the 'accounting server C1', the 'accounting server C2', or the 'accounting server C3'is included, the first transmission history-dependent processing apparatus of the fourth embodiment carries out the distribution of music file.

By thus defining the first procedure information, load distribution of information processing at the passing point, or of line occupancy becomes possible.

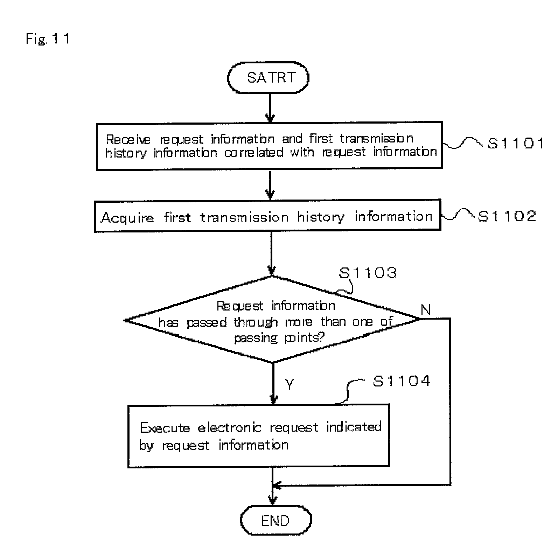

Fig. 11 is a flow chart exemplifying the processing flow of the fifth embodiment. The processing flow of the fifth embodiment is as follows. At the outset, the request information and first transmission history information correlated with the request information are received (step S1101). Subsequently, the first transmission history information received by said step S1101 is acquired (step S1102).

Subsequently, it is determined whether the request information has passed at least one of the passing points (step S1103). If it is determined that the request information has passed at least one of the passing points, the electronic request indicated by the request information is executed (step S1104).

Meanwhile, if it is determined that the request information has not passed any one of the passing points, the electronic request indicated is not executed, and the processing is terminated.

According to the first transmission history-dependent processing apparatus of the fifth embodiment, the load distribution of information processing at the passing point, or of the line occupancy becomes possible.

### (Sixth embodiment)

The sixth embodiment according to any one of the first to fifth embodiments is characterized in that the request information includes request information for distribution, which indicates a request for distribution of content. As described above, the present invention enables management relating to various electronic requests such as a request for unlocking an electronic lock. Specifically, it becomes possible to produce an effect in management and protection of the copyright of content distributed by the distribution request for content on the internet. Therefore, it becomes possible to build a business concentrated on the effective protection and management of the copyright of content.

Note that the functional block of the first transmission history-dependent processing apparatus of the sixth embodiment is the same as that of the first embodiment etc., so that the description and illustration thereof will be omitted.

According to the first transmission history-dependent processing apparatus of the sixth embodiment, it becomes possible to build a business concentrated on the effective protection and management of the copyright of content.

### (Seventh embodiment)

The seventh embodiment according to any one of the first to fifth embodiments is characterized in that the request information includes request information for reproduction, which indicates a request for reproduction of content by means of a reproducing device. Thus, similarly to the sixth embodiment, according to the seventh embodiment, it becomes possible to build a business concentrated on the effective protection and management of the copyright of content.

In addition, the seventh embodiment is characterized in that the request information is not for distribution of content, but for reproduction of content by means of the reproduction device. Therefore, the seventh embodiment is applicable to protection and management of the copyright of streaming-distributed content. Alternatively, in cases where encrypted image information is acquired from a DVD-media or a server on the internet, the information for decryption may be distributed in accordance with the transmission history of the request information.

Note that the functional block of the transmission history-dependent processing apparatus of the seventh embodiment is the same as that of the first embodiment etc., so that the description and illustration thereof will be omitted.

According to the first transmission history-dependent processing apparatus of the seventh embodiment, it becomes possible to build a business concentrated on the effective protection and management of the copyright of content. Specifically, it becomes possible to build a business concentrated on protection and management of the copyright of streaming-distributed content or of encrypted information.

### (Eighth embodiment)

Similarly to the first embodiment, it is an objective of the eighth embodiment to protect and manage the copyright of content, and the second transmission history-dependent processing apparatus of the eighth embodiment carries out processing in accordance with the transmission path. The difference from the first embodiment is that not the request information but the object information such as content itself is processed. Therefore, the apparatus of the first embodiment is mostly installed in the content server etc., and carries out processing of the request information transmitted from the user's terminal in accordance with the transmission path thereof. Meanwhile, the apparatus of the eighth embodiment is mostly installed in the user's terminal, and determines whether the content, which has been transmitted from the content server to the terminal, is transmitted via the authentic transmission path, and carries out processing of content reproduction etc. Hereinbelow, the concept of the eighth embodiment will be described with reference to the drawings.

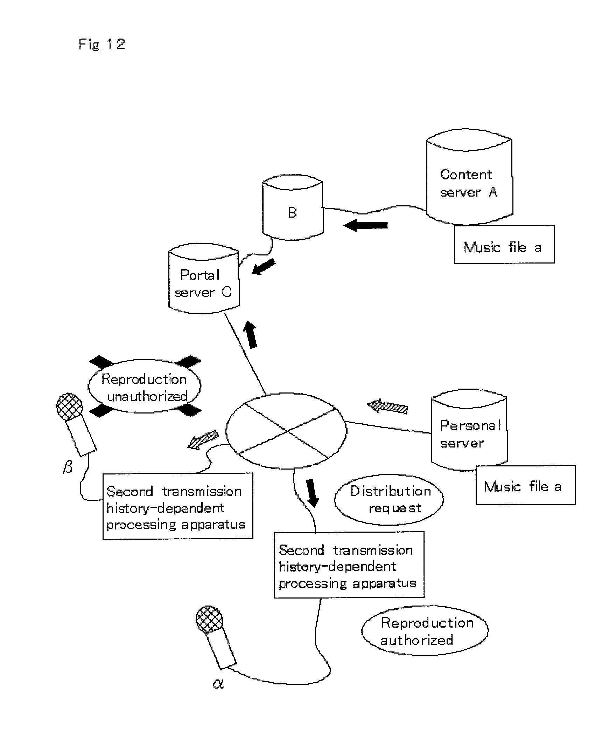

Fig. 12 is a diagram exemplifying the contents distribution service by means of the second transmission history-dependent processing apparatus of the eighth embodiment. Hereinbelow, the description will be made with reference to the drawings. The content distribution service of this drawing is a service for enjoying karaoke, in which the music file is downloaded from the content server on the internet to the microphone-like karaoke equipment, and is reproduced. Here, the karaoke equipment α gains access to the content server A, which includes the official distribution site for music, and sends a request for download of the music file α., which is desired to be downloaded. After that, the content server A carries out transmission of the music file α to the karaoke equipment α via the relay server B and the portal server C as indicated by the block arrow in the diagram. Here, the second transmission history-dependent processing apparatus of the eighth embodiment, which has been preliminarily installed in the karaoke equipment α, confirms the transmission path of the music file α. After that, if it is confirmed that the music file α has passed the relay server B and the portal server C, which are associated with the content server A, decryption and reproduction of the music file α by the karaoke equipment α is authorized. Thus, the user of the karaoke equipment α can enjoy karaoke.

Meanwhile, the user of the karaoke equipment β also wants to enjoy karaoke using the music file α. However, the karaoke equipment β carries out downloading of the music file α not from the official distribution site for music, but from the personal server, which has not been authorized by the copyright holder, as indicated by the shaded arrow. Here, the second transmission history-dependent processing apparatus of the eighth embodiment, which has been preliminarily installed in the karaoke equipment β, determines that this music file α has been distributed without authorization by the copyright holder because the transmission history of this music file α does not include the relay server B and the portal server C, which are necessary to be included if the music file α has been distributed from the official distribution site for music. Consequently, the encryption and reproduction of the music file α are not authorized.

As described above, according to the second transmission history-dependent processing apparatus of the eighth embodiment, it becomes possible to confirm whether the content has been distributed in an authorized manner under management by the copyright holder or by the copyright management organization, thereby determining authenticity of content reproduction by the terminal, which is a destination of the distribution.

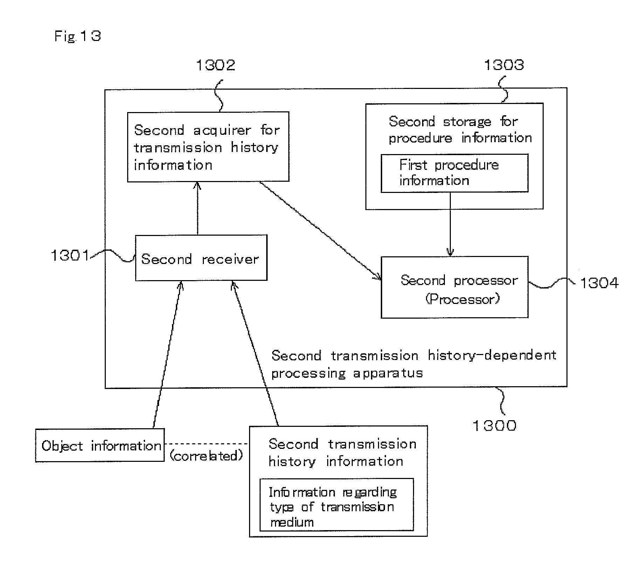

Fig. 13 is a functional block diagram of the second transmission history-dependent processing apparatus of the eighth embodiment. As shown in this diagram, the 'second transmission history-dependent processing apparatus' of the eighth embodiment (1300), comprises, the 'second receiver' (1301), the 'second acquirer for transmission history information' (1302), the 'second storage for procedure information' (1303), and the 'second processor' (1304).

Note that the 'second receiver' (1301) receives not the request information but the object information, and receives not the first transmission history information but the second transmission history information. Other functions thereof are the same as those of the 'first receiver' described in the first embodiment, so that the description will be omitted.

The 'object information' corresponds to information to be processed. Examples of it include a movie, an image, music, text, a program, or an address of information. The copyright of the movie, image, music, and text, which are contents in content distribution, are protected and managed by the apparatus of the eighth embodiment. In the case of the program, it may be executed at the destination of the distribution in accordance with its transmission path. Examples of the program include varied information for executing electronic requests other than the contents mentioned as the request information. In the case of the address of information, for example, an address of a mirror server, whose line is vacant, may be selected from a plurality of addresses of mirror servers in accordance with the required time included in the transmission history.

In addition, this object information may be encrypted so that free execution is prohibited in order to protect the copyright.

The 'second transmission history information' corresponds to information indicating transmission history of the object information. Note that the transmission history, the second transmission history information, and the generation of them are the same as those exemplified in the first embodiment, so that the description thereof will be omitted. Note that, similar to the case of the first receiver, it is not necessary for the object information and the second transmission history information to be received simultaneously by the second receiver providing that they are correlated with each other.

The 'second acquirer for transmission history information' (1302) acquires not the first transmission history information but the second transmission history information. The other points are the same as those of the 'first acquirer for transmission history information' described in the first embodiment, so that the description will be omitted.

The 'second storage for procedure information' (1303) stores not the first procedure information but the second procedure information. The other points are the same as those of the 'first storage for procedure information' described in the first embodiment, so that the description will be omitted.

The 'second procedure information' corresponds to the information defining processing of the object information in accordance with the transmission history. Here, the object information, not the request information, is defined to be processed. The other points are the same as those of the first procedure information described in the first embodiment, so that the exemplification thereof will be omitted.

The 'second processor' (1304) processes not the request information but the object information in accordance not with the first procedure information but with the second procedure information. The other points are the same as those of the 'first processor' described in the first embodiment, so that the description will be omitted.

Hereinbelow, the processing in the second processor will be described with reference to a concrete example. For example, the 'relay server B' and the 'portal server C' as the relay points to be passed by the object information, and the processing of the object information 'encryption and reproduction of the music file α' in cases where the transmission history is fulfilled, are defined as the second procedure information, which has been stored. Here, the 'music file α' as the object information is received, and the transmission path 'from the content server A, the relay server B, the portal server C, ... , to the karaoke equipment α' is indicated as the second transmission history information of the object information, which has been acquired. Then, this second processor compares the second procedure information with the transmission history information, and determines whether the transmission history of the object information fulfils the defined transmission history. If it is determined that the defined transmission history is fulfilled, the encryption and reproduction of the music file α is carried out in accordance with the definition of processing of the object information. Of course, if the information indicating the transmission history of the object information does not match the defined second procedure information, the above encryption may not be carried out, or deletion of the music file itself may be carried out.

Alternatively, the apparatus of the eighth embodiment is assumed to be installed mostly in the user's terminal. Therefore, in order to prevent unauthorized copying of the music file from the terminal, to which the music file has been downloaded through the authentic transmission history, to another user's terminal in unauthorized manner, the processing, in which only reproduction thereof is allowed and copying is not allowed, may be carried out.

As described above, the second transmission history-dependent processing apparatus of the eighth embodiment carried out appropriate processing of the object information in accordance with the transmission history thereof, so that by confirming whether the object information has passed the server etc., which is equipped with the content server, and is managed by the copyright holder or the copyright management organization, in an authorized manner, it becomes possible to determine the authenticity of the content reproduction by the terminal, to which the content has been distributed.

In addition, the copyright holder or the copyright management organization manages and monitors the servers as relay points, so that it becomes possible to know the flow of distributed content, and to build a copyright business such as collection of licensing fees according to amount of distribution (number of times), or to transmission path.

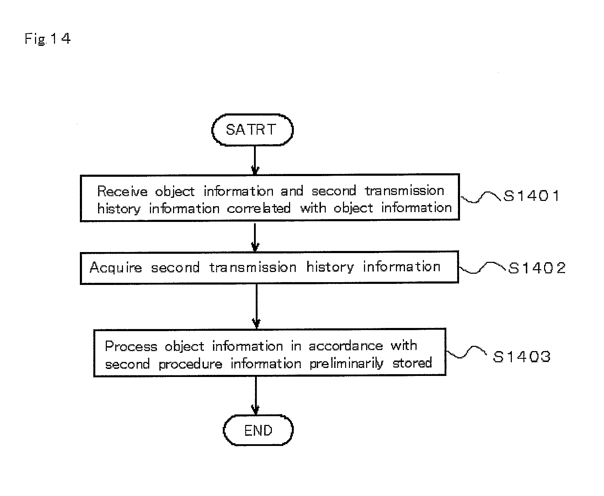

Fig. 14 is a flow chart exemplifying the processing flow of the eighth embodiment. The processing flow of the eighth embodiment is as follows. At the outset, the object information and the second transmission history information correlated with the object information are received (step S1401). Subsequently, the second transmission history information received by step S1401 is acquired (step S1402). Finally, the object information is processed in accordance with the second procedure information preliminarily stored (step S1403).

As described above, the second transmission history-dependent processing apparatus of the eighth embodiment carries out appropriate processing of the object information in accordance with the transmission history thereof, so that by confirming whether the object information has passed the server etc., which is equipped with the content server, and is managed by the copyright holder or the copyright management organization, in an authorized manner, it becomes possible to determine the authenticity of the content reproduction by the terminal, to which the content has been distributed.

In addition, the copyright holder or the copyright management organization manages and monitors the servers as relay points, so that it becomes possible to know the flow of distributed content, and to build a copyright business such as collection of licensing fees according to amount of distribution (number of times), or to transmission path

### (Ninth embodiment)

Similarly to the second embodiment, the ninth embodiment according to the eighth embodiment is characterized in that the second transmission history information includes information regarding passing point such as a portal server or a relay server. Accordingly, similarly to the second embodiment, according to the second transmission history-dependent processing apparatus of the ninth embodiment, it becomes possible to regard transmission paths as one, thereby specifying a transmission path of the object information even in huge web-like network. Accordingly, it becomes possible to produce a great effect in management and protection of the copyright.

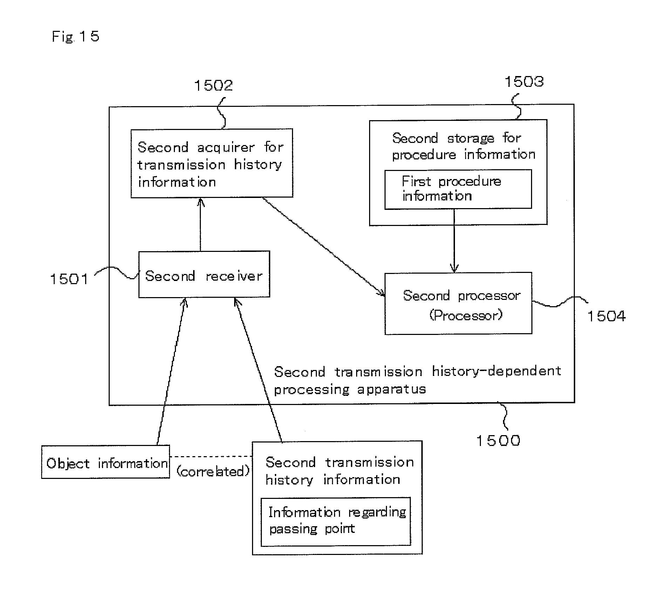

Fig. 15 is a functional block diagram of the second transmission history-dependent processing apparatus of the ninth embodiment. As shown in this diagram, the 'second transmission history-dependent processing apparatus' of the ninth embodiment (1500), comprises, the 'second receiver' (1501), the 'second acquirer for transmission history information' (1502), the 'second storage for procedure information' (1503), and the 'second processor' (1504). Note that the 'second receiver', the 'second acquirer for transmission history information', the 'second storage for procedure information', and the 'second processor' are the same as those described in the eighth embodiment, so that the descriptions will be omitted.

Further, the ninth embodiment is characterized in that the second transmission history information received by the 'second receiver' includes information regarding passing point. The 'information regarding passing point' has been described in the second embodiment, so that the description will be omitted.

Similarly to the second embodiment, according to the second transmission history-dependent processing apparatus of the ninth embodiment, it becomes possible to easily specify a transmission path even in huge web-like network, thereby producing a great effect in management and protection of the copyright.

### (Tenth embodiment)

Similarly to the third embodiment, the tenth embodiment according to the eighth or ninth embodiment is characterized in that the transmission history information includes information regarding type of transmission medium, which is information indicating type of device, type of recording medium, or type of network medium.

The tenth embodiment by means of the second transmission history-dependent processing apparatus is as follows. For example, in cases where the movie content is distributed via a slow-speed line such as ISDN, which is a network medium, the image quality thereof mostly diminishes. In order to solve this deficiency, the reproduction of the movie content with such transmission history by a high-definition output terminal such as a large-screen digital television is not allowed. Thus, it becomes possible to prevent the processing of the content in an undesired form for the copyright holder.

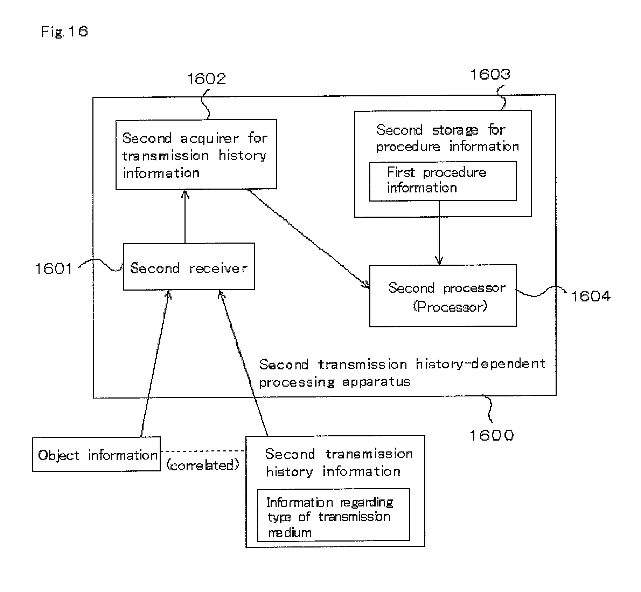

Fig. 16 is a functional block diagram of the second transmission history-dependent processing apparatus of the tenth embodiment. As shown in this diagram, the 'second transmission history-dependent processing apparatus' of the tenth embodiment (1600), comprises, the 'second receiver' (1601), the 'second acquirer for transmission history information' (1602), the 'second storage for procedure information' (1603), and the 'second processor' (1604). Note that the 'second receiver', the 'second acquirer for transmission history information, the 'second storage for procedure information', and the 'second processor' are the same as those described in the eighth embodiment, so that the descriptions will be omitted.

Further, the tenth embodiment is characterized in that the second transmission history information received by the 'second receiver' includes information regarding type of transmission medium. The 'information regarding type of transmission medium' has been described in the third embodiment, so that the description will be omitted.

Thus, the information regarding type of transmission medium is included in the second transmission history information, so that it becomes possible to carry out processing of the content in the desired form for the copyright holder.

In addition, if it is determined in accordance with the type of transmission medium whether the processing of the object information is carried out, it becomes possible to build a business such as over-the-counter sale using only a special recording medium.

As described above, according to the second transmission history-dependent processing apparatus of the tenth embodiment, it becomes possible to carry out processing of the content in the desired form for the copyright holder, and to build a business such as over-the-counter sale using a special recording medium.

### (Eleventh embodiment)

Similarly to the fourth embodiment, the eleventh embodiment according to the ninth embodiment is characterized in that only in the case where the object information has passed all of the passing points indicated by the information regarding passing point, the possible processing is executed for the object information. Similarly to the fourth embodiment, this makes it possible to provide more assured protection and management of the copyright of content as the object information.

Note that the functional block of the second transmission history-dependent processing apparatus of the eleventh embodiment is the same as that of the ninth embodiment, so that the description and illustration thereof will be omitted.

The eleventh embodiment is characterized in that the second procedure information defines whether the possible process for the object information is executed in accordance with the second transmission history information. Here, the information included in the second transmission history information, which indicates that the object information has passed all the passing points, is used for defining the execution of the possible process for the object information.

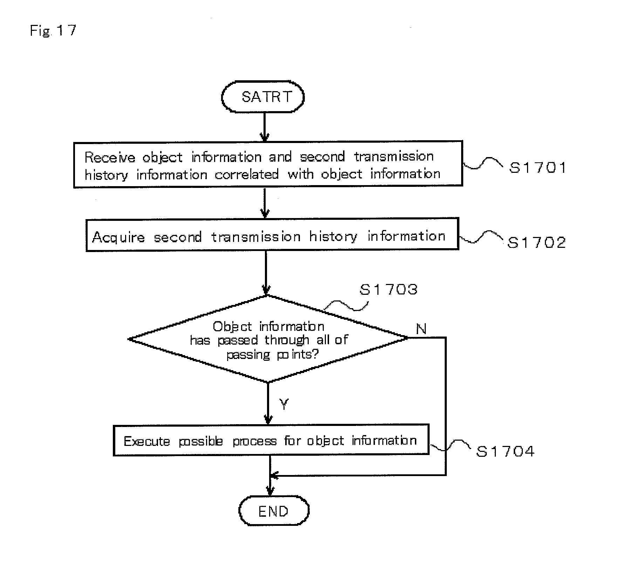

Fig. 17 is a flow chart exemplifying the processing flow of the eleventh embodiment. The processing flow of the eleventh embodiment is as follows. At the outset, the object information and the second transmission history information correlated with the object information are received (step S1701). Subsequently, the second transmission history information received by the step S1701 is acquired (step S1702).

Subsequently, it is determined whether the object information has passed all the passing points (step S1703). If it is determined that the object information has passed all the passing points, the possible process for the object information is executed (step S1704).

Meanwhile, if it is determined that the object information has not passed all the passing points, the possible process for the object information is not executed, and the processing is terminated.

According to the second transmission history-dependent processing apparatus of the eleventh embodiment, more assured protection of the copyright of content becomes possible.

### (Twelfth embodiment)

Similarly to the fifth embodiment, the twelfth embodiment according to the ninth embodiment is characterized in that in cases where the object information has passed at least one of the passing points indicated by the information regarding passing point, the possible process for the object information is executed. Therefore, similarly to the fifth embodiment, in the case of popular content, by means of the configuration, in which a plurality of relay servers are provided, and any one of the servers is specified to be passed, it becomes possible to reduce the load of the relay server.

Note that the functional block of the second transmission history-dependent processing apparatus of the twelfth embodiment is the same as that of the ninth embodiment, so that the description and illustration thereof will be omitted.

The twelfth embodiment is characterized in that the second procedure information defines whether the possible process for the object information is executed in accordance with the second transmission history information. Here, the information included in the second transmission history information, which indicates that the object information has passed at least one of the passing points, is used for defining the execution of the possible process for the object information.

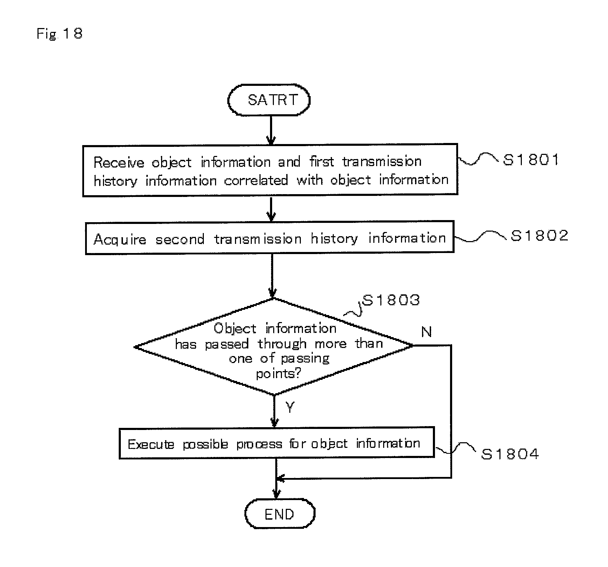

Fig. 18 is a flow chart exemplifying the processing flow of the eleventh embodiment. The processing flow of the eleventh embodiment is as follows. At the outset, the object information and the second transmission history information correlated with the object information are received (step S1801). Subsequently, the second transmission history information received by the step S1801 is acquired (step S1802).

Subsequently, it is determined whether the object information has passed at least one of the passing points (step S1803). If it is determined that the object information has passed at least one of the passing points, the possible process for the object information is executed (step S1804).

Meanwhile, if it is determined that the object information has not passed any one of the passing points, the possible process for the object information is not executed, and the processing is terminated.

According to the second transmission history-dependent processing apparatus of the twelfth embodiment, the load distribution of information processing at the passing point, or of the line occupancy becomes possible.

### (Thirteenth embodiment)

The thirteenth embodiment is the third transmission history-dependent processing apparatus, which has both functions of the first transmission history-dependent processing apparatus of the first embodiment and of the second transmission history-dependent processing apparatus of the eighth embodiment. Specifically, in accordance with the transmission history of the request information for requesting content distribution on the network, and with the transmission history of the content distributed based on the request information, the request information and the content is processed. In this case, it is assumed that the third transmission history-dependent processing apparatus is equipped with both content provider and user's terminal. Further, there may be a difference between the transmission path indicated in the transmission history of the request information and the transmission path indicated in the transmission history of the content information. Specifically, for example, the request information is transmitted from the terminal α to the content provider A via the relay server B1 and the accounting server C on the internet. Meanwhile, the object information, which is the content, is transmitted from the content provider to the terminal a via the portal server P and the relay server B2 on the internet. This is applicable to the case where the request information, of which data amount is comparatively small, is transmitted via the network such as a mobile phone, and music or movie, whose data amount is large, is distributed via the internet.

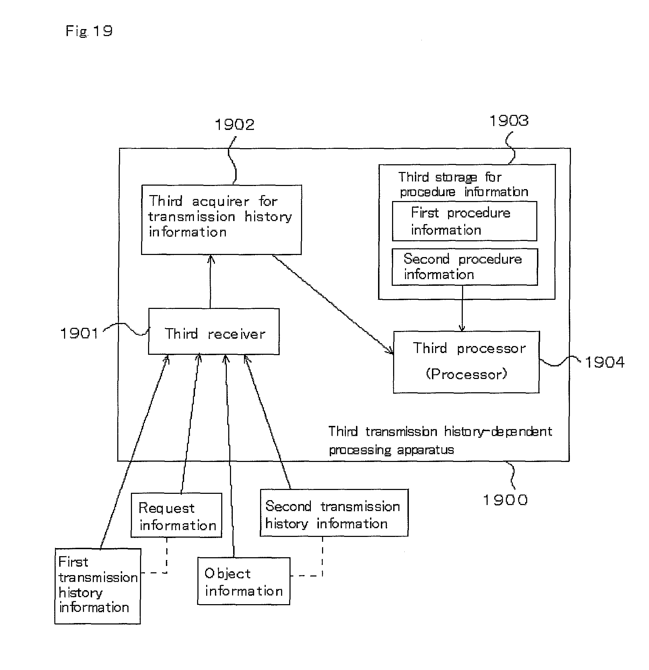

Fig. 19 is a functional block diagram of the third transmission history-dependent processing apparatus of the thirteenth embodiment. As shown in this diagram, the 'third transmission history-dependent processing apparatus' of the thirteenth embodiment (1900), comprises, the 'third receiver' (1901), the 'third acquirer for transmission history information' (1902), the 'third storage for procedure information' (1903), and the 'third processor' (1904).

The 'third receiver' (1901) receives the request information, the first transmission history information, the object information, and the second transmission history information. The functions thereof are the same as those of the 'first receiver' described in the first embodiment and of the 'second receiver' described in the eighth embodiments, so that the description will be omitted.

The 'third acquirer for transmission history information' (1902) acquires the first transmission history information, and the second transmission history information. The other points are the same as those of the 'first acquirer for transmission history information' described in the first embodiment and of the 'second acquirer for transmission history information' described in the eighth embodiments, so that the description will be omitted.

The 'third storage for procedure information' (1903) stores the first procedure information, and the second procedure information. The other points are the same as those of the 'first storage for procedure information' described in the first embodiment and of the 'second storage for procedure information' described in the eighth embodiments, so that the description will be omitted.

The 'third processor' (1904) processes the request information, and the object information in accordance with the first procedure information, and with the second procedure information. The other points are the same as those of the 'first processor' described in the first embodiment, and the 'second processor' described in the eighth embodiment so that the description will be omitted.

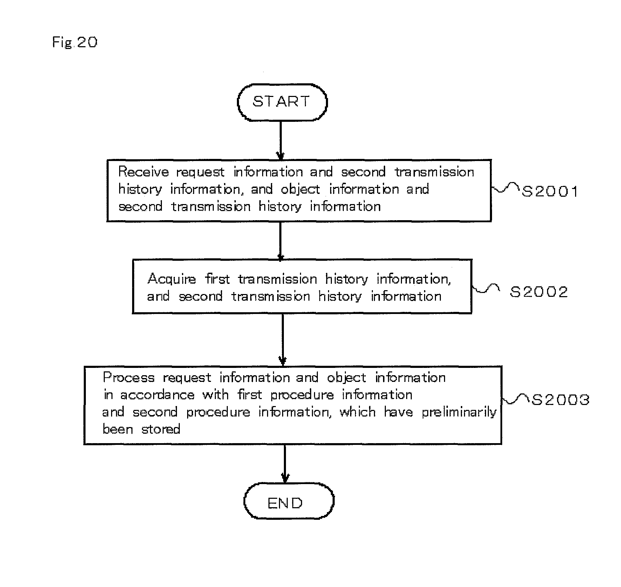

Fig. 20 is a flow chart exemplifying the processing flow of the thirteenth embodiment. The processing flow of the thirteenth embodiment is as follows. At the outset, the request information, the first transmission history information correlated with the request information, the object information, and the second transmission history information correlated with the object information are received (step S2001). Subsequently, the first transmission history information and the second transmission history information received by the step S2001 are acquired (step S2002). Finally, the request information and the object information are processed in accordance with the first procedure information and with the second procedure information, which have been preliminarily stored (step S2003).

According to the third transmission history-dependent processing apparatus of the thirteenth embodiment, it becomes possible to appropriately carry out processing of the request information and processing of the object information in accordance with the transmission histories of both the request information and the object information.

### (Fourteenth embodiment)

Similarly to the second or ninth embodiment, the fourteenth embodiment according to the thirteenth embodiment is characterized in that the first transmission history information and the second transmission history information include information regarding passing point such as a portal server or a relay server. Accordingly, similarly to the second or ninth embodiment, according to the fourteenth embodiment, it becomes possible to regard transmission paths as one, thereby specifying a transmission path of the request information and a transmission path of the object information even in huge web-like network. Accordingly, it becomes possible to produce a great effect in management and protection of the copyright.

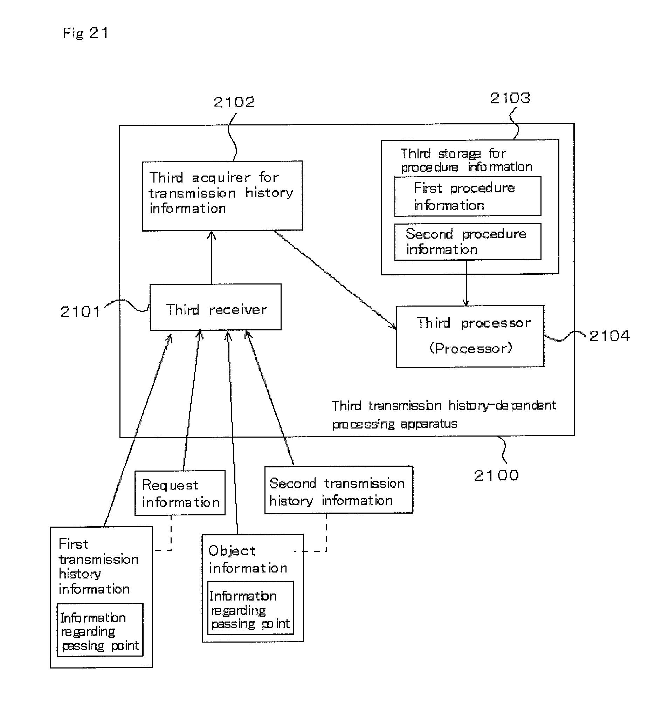

Fig. 21 is a functional block diagram of the third transmission history-dependent processing apparatus of the fourteenth embodiment. As shown in this diagram, the 'third transmission history-dependent processing apparatus' of the fourteenth embodiment (2100), comprises, the 'third receiver' (2101), the 'third acquirer for transmission history information' (2102), the 'third storage for procedure information' (2103), and the 'third processor' (2104). Note that the 'third receiver', the 'third acquirer for transmission history information', the 'third storage for procedure information', and the 'third processor' are the same as those of the thirteenth embodiment, so that the descriptions will be omitted.

Further, the fourteenth embodiment is characterized in that the first transmission history information and the second transmission history information received by the 'third receiver' include information regarding passing point. The 'information regarding passing point' has been described in the second embodiment, so that the description will be omitted.

Similarly to the second or ninth embodiment, according to the third transmission history-dependent processing apparatus of the fourteenth embodiment, it becomes possible to regard transmission paths as one, thereby specifying a transmission path of the request information and a transmission path of the object information even in huge network like web. Accordingly, it becomes possible to produce a great effect in management and protection of the copyright.

### (Fifteenth embodiment)

Similarly to the third or tenth embodiment, the fifteenth embodiment according to the thirteenth or fourteenth embodiment is characterized in that the first transmission history information and the second transmission history information include information regarding type of transmission medium, which is information indicating type of device, type of recording medium, or type of network medium. Accordingly, similarly to the third embodiment, the information regarding type of transmission medium is included in the transmission history, so that third transmission history-dependent processing apparatus of the fifteenth embodiment is able to carry out processing depending on the type of manufacturer or manager, thereby enabling the protection of the copyright of content and the customer retention as described above.

In addition, similarly to the tenth embodiment, in cases where the movie content is distributed via a slow-speed line, the reproduction of the movie content by a high-definition output terminal such as a large-screen digital television is not allowed. Thus, it becomes possible to prevent the processing of the content in an undesired form for the copyright holder.

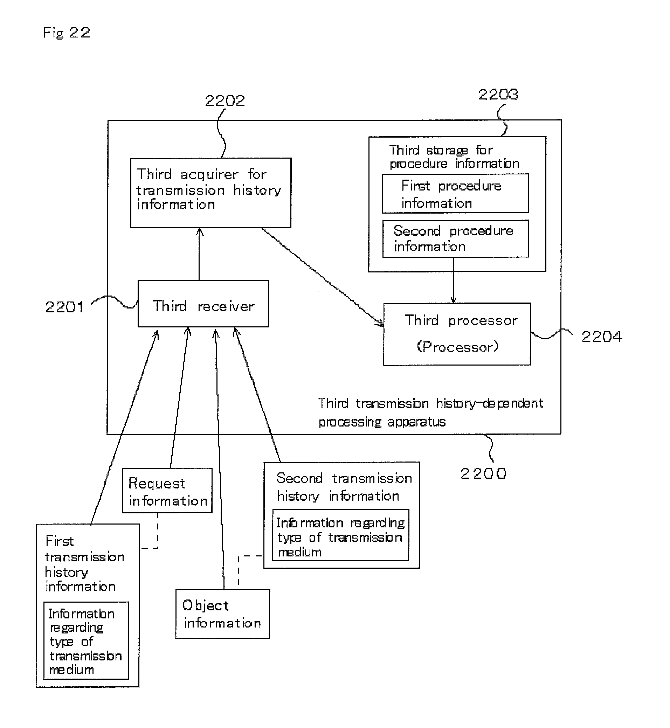

Fig. 22 is a functional block diagram of the third transmission history-dependent processing apparatus of the fifteenth embodiment. As shown in this diagram, the 'third transmission history-dependent processing apparatus' of the fifteenth embodiment (2200), comprises, the 'third receiver' (2201), the 'third acquirer for transmission history information' (2202), the 'third storage for procedure information' (2203), and the 'third processor' (2204). Note that the 'third receiver', the 'third acquirer for transmission history information', the 'third storage for procedure information', and the 'third processor' are the same as those of the thirteenth embodiment, so that the descriptions will be omitted.

Further, the fifteenth embodiment is characterized in that the first transmission history information and the second transmission history information received by the 'third receiver' include information regarding type of transmission medium. The 'information regarding type of transmission medium' has been described in the third embodiment, so that the description will be omitted.

As described above, third transmission history-dependent processing apparatus of the fifteenth embodiment is able to carry out processing depending on the type of manufacturer or manager, thereby enabling the protection of the copyright of content and the customer retention as described above. Moreover, by carrying out processing for the request information in accordance with the type of the network medium, it becomes possible to carry out processing on the basis of the first procedure information. For example, if the information indicating a mobile phone line is included in the transmission history information, high-resolution movie, which requires high-level processing, is not distributed. Furthermore, it becomes possible to carry out processing of the content in the desired form for the copyright holder, and to build a business such as over-the-counter sale using a special recording medium

### (Sixteenth embodiment)

Similarly to the fourth or tenth embodiment, the sixteenth embodiment according to the fourteenth embodiment is characterized in that only in the case where the request information and the object information have passed all the passing points indicated by the information regarding passing point, the processing of the request information and the possible processing for the object information are carried out. Similarly to the fourth or tenth embodiment, this makes it possible to provide more assured protection and management of the copyright of content as the object information.

Note that the functional block of the third transmission history-dependent processing apparatus of the sixteenth embodiment is the same as that of the fourteenth embodiment, so that the description and illustration thereof will be omitted.

The sixteenth embodiment is characterized in that the first procedure information, and the second procedure information defines whether the electronic request indicated by the request information and the possible process for the object information are executed in accordance with the first transmission history information, and with the second transmission history information. Here, the information included in the first transmission history information and the second transmission history information, which indicate that the request information and the object information have passed all the passing points, is used for defining the execution of the electronic request and of the possible process for the object information.

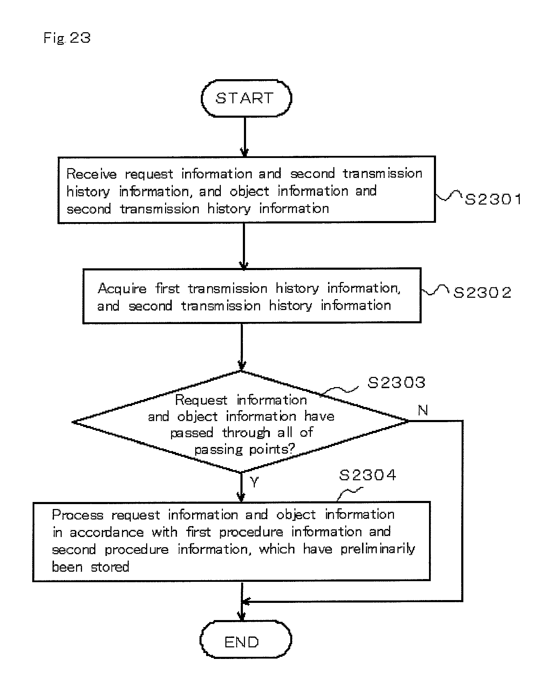

Fig. 23 is a flow chart exemplifying the processing flow of the sixteenth embodiment. The processing flow of the sixteenth embodiment is as follows. At the outset, the request information, the first transmission history information, the object information, and the second transmission history information are received (step S2301). Subsequently, the first transmission history information, and the second transmission history information received by step S2301 are acquired (step S2302). Subsequently, it is determined whether the request information and the object information have passed all the passing points (step S2303). If it is determined that the request information and the object information have passed all the passing points, the electronic request indicated by the request information and the possible process for the object information are executed (step S2304).

Meanwhile, if it is determined that the request information and the object information have not passed all of the passing points, the electronic request indicated by the request information and the possible process for the object information are not executed, and the processing is terminated.

According to the third transmission history-dependent processing apparatus of the sixteenth embodiment, more assured protection of the copyright of content becomes possible.

### (Seventeenth embodiment)

Similarly to the fifth embodiment, the seventeenth embodiment according to the fourteenth embodiment is characterized in that in the case where the request information and the object information have passed at least one of the passing points indicated by the information regarding passing point, the processing of the request information and the possible processing for the object information are carried out. Similarly to the fifth embodiment, in the case of popular content, by means of the configuration, in which a plurality of relay servers are provided, and any one of the servers is to be passed, it becomes possible to reduce the load of the relay server.

Note that the functional block of the third transmission history-dependent processing apparatus of the seventeenth embodiment is the same as that of the fourteenth embodiment, so that the description and illustration thereof will be omitted.

The seventeenth embodiment is characterized in that the first procedure information, and the second procedure information defines whether the electronic request indicated by the request information and the possible process for the object information are executed in accordance with the first transmission history information, and with the second transmission history information. Here, the information included in the first transmission history information and the second transmission history information, which indicate that the request information and the object information have passed at least one of the passing points, is used for defining the execution of the electronic request indicated by the request information and of the possible process for the object information.

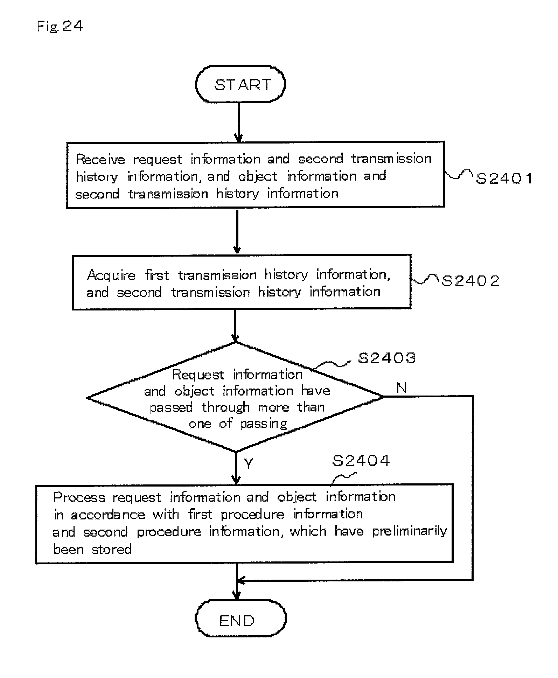

Fig. 24 is a flow chart exemplifying the processing flow of the seventeenth embodiment. The processing flow of the seventeenth embodiment is as follows. At the outset, the request information, the first transmission history information, the object information, and the second transmission history information are received (step S2401). Subsequently, the first transmission history information, and the second transmission history information received by step S2401 are acquired (step S2402). Subsequently, it is determined whether the request information and the object information have passed at least one of the passing points (step S2403). If it is determined that the request information and the object information have passed at least one of the passing points, the electronic request indicated by the request information and the possible process for the object information are executed (step S2404).

Meanwhile, if it is determined that the request information and the object information have not passed any one of the passing points, the electronic request and the possible process for the object information are not executed, and the processing is terminated.

According to the third transmission history-dependent processing apparatus of the seventeenth embodiment, the load distribution of information processing at the passing point, or of the line occupancy becomes possible.

### (Eighteenth embodiment)

Similarly to the sixth embodiment, the eighteenth embodiment according to any one of the thirteenth to seventeenth embodiments is characterized in that the request information includes request information for distribution, which indicates a request for distribution of content. Therefore, similarly to the sixth embodiment, according to third transmission history-dependent processing apparatus of the eighteenth embodiment, it becomes possible to build a business concentrated on the effective protection and management of the copyright of content.

Note that the functional block of the third transmission history-dependent processing apparatus of the eighteenth embodiment is the same as that of the thirteenth embodiment etc., so that the description and illustration thereof will be omitted.

According to the third transmission history-dependent processing apparatus of the eighteenth embodiment, it becomes possible to build a business concentrated on the effective protection and management of the copyright of content.

### (Nineteenth embodiment)

Similarly to the seventh embodiment, the nineteenth embodiment according to any one of the thirteenth to seventeenth embodiments is characterized in that the request information includes request information for reproduction, which indicates a request for reproduction of content by means of a reproducing device. Thus, similarly to the seventh embodiment, according to the nineteenth embodiment, it becomes possible to build a business concentrated on protection and management of the copyright of streaming-distributed content.

Note that the functional block of the third transmission history-dependent processing apparatus of the nineteenth embodiment is the same as that of the thirteenth embodiment etc., so that the description and illustration thereof will be omitted.

According to the third transmission history-dependent processing apparatus of the nineteenth embodiment, it becomes possible to build a business concentrated on the effective protection and management of the copyright of content. Specifically, it becomes possible to build a business concentrated on protection and management of the copyright of streaming-distributed content or of encrypted information.

### (Twentieth embodiment)

The transmission history-dependent processing apparatus of the twentieth embodiment is similar to that of the thirteenth embodiment. The twentieth embodiment and the thirteenth embodiment are similar in processing the request information and the object information. However, the twentieth embodiment is characterized in that the request information and the object information have correlation as 'the request for content distribution and the content distributed in accordance with the request'. In addition, the further difference is not that the processing of the first procedure information and processing of the second procedure information are independently carried out for the request information and the object information, but that both processing of the first procedure information and processing of the second procedure information are carried out for the request information and/or the object information.

Therefore, the first procedure information defines that 'if the time required for transmission is longer than a predetermined time, the movie data, which is only with subtitles and without sound, is reproduced'. Meanwhile, the second procedure information defines that 'if the authentication server has been passed thorough, the reproduction by means of a reproducing device is allowed'. Here, in cases where the transmission history information of the request information indicates that the time required for transmission is longer than a predetermined time, and the transmission history information of the object information indicates that the movie data has passed the authentication server, and has been streaming-distributed in authorized manner, as to the movie data as the object information, the processing without sound defined by the first procedure information, and the processing of reproduction, which has been allowed, are carried out.

The 'third transmission history-dependent processing apparatus' of the twentieth embodiment comprises, the 'third receiver', the 'third acquirer for transmission history information', the 'third storage for procedure information', and the 'third processor', Note that the 'third receiver', the 'third acquirer for transmission history information', the 'third storage for procedure information', and the 'third processor' are the same as those of the thirteenth embodiment, so that the descriptions will be omitted.

The twentieth embodiment is characterized in that the object information received by the third receiver is the information to be processed, which occurs based on the request information. The term 'occur' means various occurrences such as acquisition, distribution, or generation. Thus, there is correlation between the request information and the object information.

As described above, the request information and/or the object information are processed in accordance with the third procedure information, which defines the processing of the request information and/or the object information in accordance with the first transmission history information, and with the second transmission history information.

As described above, the transmission history-dependent processing apparatus of the twentieth embodiment, it becomes possible to carry out processing of the request information and the object information in accordance with history information in various transmission conditions.

### (Twenty-first embodiment)

Similarly to the twentieth embodiment, the apparatus of the twenty-first embodiment is characterized in that the request information and the object information have a strong correlation. However, the difference from the twentieth embodiment is that only the object information is a processing object. A further difference is that the fourth procedure information, which defines the processing of the object information, includes both first transmission history information and second transmission history information in the definition.

In the twenty-first embodiment, if the required time indicated by the transmission history of the request information and the required time indicated by the transmission history of the object information are the same, it is determined that there has been no interception or falsification of the object information and the request information by the fourth party.

Here, as the fourth procedure information, a new definition of 'information regarding security certification for content is given' is generated, and the processing for the object information is carried out.

The 'fourth transmission history-dependent processing apparatus' of the twenty-first embodiment comprises, the 'fourth receiver', the 'fourth acquirer for transmission history information', the 'fourth storage for procedure information', and the 'fourth processor'. Note that the 'fourth receiver', the 'fourth acquirer for transmission history information', the 'fourth storage for procedure information', and the 'fourth processor' are the same as those of the thirteenth embodiment, so that the descriptions will be omitted.

The twenty-first embodiment is characterized in that the object information received by the fourth receiver is the information to be processed, which occurs based on the request information, and that the transmission history information of the request information is acquired, whereas the request information itself is not acquired.

In addition, the fourth storage for procedure information stores the fourth procedure information defining processing of the object information based on the first transmission history information and on the second transmission history information. As described above, this 'fourth procedure information' is not a definition in accordance with either the first transmission history information or the second transmission history information, and includes both first transmission history information and second transmission history information in the definition of processing. For example, if both time required for transmission are same, the security certification is given.

As described above, the transmission history-dependent processing apparatus of the twenty-first embodiment, it becomes possible to carry out processing of the object information in accordance with history information in both transmission conditions of the request information and of the object information.

## Claims

1. A first transmission history-dependent processing apparatus, comprising:
a first receiver, which receives request information indicating an electronic request, and
first transmission history information, which indicates transmission history correlated with said request information;
a first acquirer for transmission history information, which acquires said first transmission history information;
a first storage for procedure information, which stores first procedure information defining processing of the request information based on the transmission history; and
a first processor, which processes the request information in accordance with the first procedure information stored by the first storage for procedure information.

2. The first transmission history-dependent processing apparatus according to Claim 1, wherein
said first transmission history information includes information regarding passing point, which is information indicating a point which the request information has passed up to its reception by the first receiver.

3. The first transmission history-dependent processing apparatus according to Claim 1 or 2, wherein
said first transmission history information includes information regarding type of transmission medium, which is information indicating type of transmission medium which has been used up to the reception of the request information by the first receiver

4. The first transmission history-dependent processing apparatus according to Claim 2, wherein
said first procedure information determines whether the electronic request indicated by the request information is executed based on the first transmission history information, and
information included in said first transmission history information, which indicates that the request information has passed all said passing points, is used for defining the execution of the electronic request.

5. The first transmission history-dependent processing apparatus according to Claim 2, wherein
said first procedure information determines whether the electronic request indicated by the request information is executed based on the first transmission history information, and
information included in said first transmission history information, which indicates that the request information has passed at least one of said passing points, is used for defining the execution of the electronic request.

6. The first transmission history-dependent processing apparatus according to any one of Claims 1 to 5, wherein
said request information includes request information for distribution, which indicates a request for distribution of object information.

7. The first transmission history-dependent processing apparatus according to any one of Claims 1 to 5, wherein
said request information includes request information for reproduction, which indicates a request for reproduction of object information by means of a reproducing device.

8. A second transmission history-dependent processing apparatus, comprising:
a second receiver, which receives object information, which is an object to be processed, and second transmission history information, which indicates a
transmission history correlated with said object information;
a second acquirer for transmission history information, which acquires said second
transmission history information;
a second storage for procedure information, which stores second procedure information defining the processing of the object information based on the transmission history; and
a second processor, which processes the object information in accordance with the second procedure information stored by the second storage for procedure information.

9. The second transmission history-dependent processing apparatus according to Claim 8, wherein
said second transmission history information includes information regarding passing point, which is information indicating a point which the object information has passed up to its reception by the second receiver

10. The second transmission history-dependent processing apparatus according to Claim 8 or 9, wherein
said second transmission history information includes information regarding type of transmission medium, which is information indicating the type of transmission medium which has been used up to the reception of the object information by the second receiver

11. The second transmission history-dependent processing apparatus according to Claim 9, wherein
said second procedure information defines whether a possible process for the object information is executed based on the second transmission history information, and
information included in said second transmission history information, which indicates that the object information has passed all said passing points, is used for defining the execution of the possible process for the object information.

12. The second transmission history-dependent processing apparatus according to Claim 9, wherein
said second procedure information defines whether a possible process for the object information is executed based on the second transmission history information, and
information included in said second transmission history information, which indicates that the object information has passed thorough at least one of said passing points, is used for defining the execution of the possible process for the object information.

13. A third transmission history-dependent processing apparatus, comprising:
a third receiver, which receives request information indicating an electronic request, first transmission history information, which indicates a transmission history correlated with said request information, object information, which is an object to be processed, and
second transmission history information, which indicates a transmission history
correlated with said object information;
a third acquirer for transmission history information, which acquires said first transmission history information, and said second transmission history information;
a third storage for procedure information, which stores first procedure information defining processing of the request information based on the transmission history, and
second procedure information defining processing of the object information based on
the transmission history; and
a third processor, which processes the request information and the object information in accordance with the first procedure information and with the second procedure information, which have been stored by the third storage for procedure information.

14. The third transmission history-dependent processing apparatus according to Claim 13, wherein
said first transmission history information and second transmission history information include information regarding passing point, which is information indicating a point which the request information and the object information have passed up to their receptions by the third receiver.

15. The third transmission history-dependent processing apparatus according to Claim 13 or 14, wherein
said first transmission history information and second transmission history information include information regarding type of transmission medium, which is information indicating type of transmission medium which has been used up to the reception of the request information and of the object information by the third receiver.

16. The third transmission history-dependent processing apparatus according to Claim 14, wherein
said first procedure information and second procedure information determine whether the electronic request indicated by the request information and the possible process for the object information are executed based on the first transmission history information and on the second transmission history information, and
the information included in said first transmission history information and in second transmission history information, which indicate that the request information and the object information have passed all said passing points, are used for defining the execution of the electronic request and the of possible process for the object information.

17. The third transmission history-dependent processing apparatus according to Claim 14, wherein
said first procedure information and second procedure information determine whether the electronic request indicated by the request information and the possible process for the object information are executed based on the first transmission history information and on the second transmission history information, and
the information included in said first transmission history information and in the second transmission history information, which indicate that the request information and the object information have passed at least one of said passing points, are used for defining the execution of the electronic request and of the possible process for the object information.

18. The third transmission history-dependent processing apparatus according to any one of Claims 13 to 17, wherein
said request information includes request information for distribution, which indicates a request for distribution of object information.

19. The third transmission history-dependent processing apparatus according to any one of Claims 13 to 17, wherein
said request information includes request information for reproduction, which indicates a request for reproduction of object information by means of a reproducing device.

20. A third transmission history-dependent processing apparatus, comprising:
a third receiver, which receives request information indicating an electronic request, first transmission history information, which indicates a transmission history correlated with said request information, object information, which is an object to be processed and
occurs based on said request information, and second transmission history information, which indicates a transmission history correlated with said object information;
a third acquirer for transmission history information, which acquires said first transmission history information, and said second transmission history information;
a third storage for procedure information, which stores third procedure information defining processing of the request information and/or the object information based on said first transmission history information and on said second transmission history information; and
a third processor, which processes the request information and/or the object information in accordance with the third procedure information, which has been stored by the third storage for procedure information.

21. A fourth transmission history-dependent processing apparatus, comprising:
a fourth receiver, which receives first transmission history information indicating a transmission history correlated with request information indicating an electronic request, object information, which is an object to be processed and occurs based on said request information, and second transmission history information, which indicates a
transmission history correlated with said object information;
a fourth acquirer for transmission history information, which acquires said first transmission history information, and said second transmission history information;
a fourth storage for procedure information, which stores fourth procedure information defining processing of the object information based on said first transmission history information and on said second transmission history information; and
a fourth processor, which processes the object information in accordance with the fourth procedure information, which has been stored by the fourth storage for procedure information.

22. A first transmission history-dependent processing method, comprising:
a first receiving step, which receives request information indicating an electronic request, and first transmission history information, which indicates a transmission history correlated with said request information;
a first acquiring step for transmission history information, which acquires said first transmission history information; and
a first processing step, which processes the request information in accordance with first procedure information defining processing of the request information based on the transmission history preliminarily stored.

23. A first transmission history-dependent processing method, comprising:
a first receiving step, which receives request information indicating an electronic request, and first transmission history information, which indicates a transmission history correlated with said request information;
a first acquiring step for transmission history information, which acquires said first transmission history information;
a first determining step, which determines whether the request information has passed all passing points; and
a first processing step for electronic request, which executes an electronic request indicated by the request information if it is determined by said first determining step that the request information has passed all passing points.

24. A first transmission history-dependent processing method, comprising:
a first receiving step, which receives request information indicating an electronic request, and first transmission history information, which indicates a transmission history correlated with said request information;
a first acquiring step for transmission history information, which acquires said first transmission history information;
a first determining step, which determines whether the request information has passed at least one of the passing points; and
a first processing step for electronic request, which executes an electronic request indicated by the request information if it is determined by said first determining step that the request information has passed at least one of the passing points.

25. A second transmission history-dependent processing method, comprising:
a second receiving step, which receives object information, which is an object to be processed, and second transmission history information, which indicates a transmission history correlated with said object information;
a second acquiring step for transmission history information, which acquires said second transmission history information; and
a second processing step, which processes the object information in accordance with second procedure information defining processing of the object information based on the transmission history preliminarily stored.

26. A second transmission history-dependent processing method, comprising:
a second receiving step, which receives object information, which is an object to be processed, and second transmission history information, which indicates a transmission history correlated with said object information;
a second acquiring step for transmission history information, which acquires said
second transmission history information;
a second determining step, which determines whether the object information has passed all passing points; and
a second executing step for processing, which executes possible processing for the object information if it is determined by said second determining step that the object information has passed all passing points.

27. A second transmission history-dependent processing method, comprising:
a second receiving step, which receives object information, which is an object to be processed, and second transmission history information, which indicates a transmission history correlated with said object information;
a second acquiring step for transmission history information, which acquires said second transmission history information;
a second determining step, which determines whether the object information has passed at least one of the passing points; and
a second executing step for processing, which executes possible processing for the object information if it is determined by said second determining step that the object information has passed at least one of the passing points.

28. A third transmission history-dependent processing method, comprising:
a third receiving step, which receives request information indicating an electronic request, first transmission history information, which indicates a transmission history correlated with said request information, object information, which is an object to be processed, and second transmission history information, which indicates a transmission history correlated with said object information;
a third acquiring step for transmission history information, which acquires said first transmission history information, and said second transmission history information; and
a third processing step, which processes the request information and the object information in accordance with the first procedure information defining processing of the request information based on the transmission history preliminarily stored and with the second procedure information defining processing of the object information based on the transmission history preliminarily stored.

29. A third transmission history-dependent processing method, comprising:
a third receiving step, which receives request information indicating an electronic request, first transmission history information, which indicates a transmission history correlated with said request information, object information, which is an object to be processed, and second transmission history information, which indicates a transmission history correlated with said object information;
a third acquiring step for transmission history information, which acquires said first transmission history information, and said second transmission history information;
a third determining step, which determines whether the request information and the object information have passed all passing points; and
a third executing step for processing of request, which executes an electronic request indicated by the request information and the possible process for the object information if it is determined by said third determining step that the request information and the object information have passed all passing points.

30. A third transmission history-dependent processing method, comprising:
a third receiving step, which receives request information indicating an electronic request, first transmission history information, which indicates a transmission history correlated with said request information, object information, which is an object to be processed, and second transmission history information, which indicates a transmission history correlated with said object information;
a third acquiring step for transmission history information, which acquires said first transmission history information, and said second transmission history information;
a third determining step, which determines whether the request information and the object information have passed at least one of the passing points; and
a third executing step for processing of request, which executes an electronic request indicated by the request information and the possible process for the object information if it is determined by said third determining step that the request information and the object information have passed at least one of the passing points.
